# EUROPÄISCHE PATENTANMELDUNG

(11) **EP 2 373 030 A1**
(43) Veröffentlichungstag der Anmeldung: **05.10.2011**
(21) Anmeldenummer: 11001913.0
(22) Anmeldetag: 08.03.2011
(51) Int. Cl.: H04N 7/26, H04N 7/34, H04N 7/36, G06T 9/00, H04N 1/64, H04N 5/335

(54) **Verfahren zur Kompression von Bilddaten**

(30) Priorität: 09.03.2010 DE 102010010736
(71) Anmelder: Arnold & Richter Cine Technik GmbH & Co. Betriebs KG, 80799 München (DE)
(72) Erfinder: Cieslinksi, Michael, 85521 Ottobrunn (DE); Andriani, Stefano, 80637 München (DE)
(74) Vertreter: Manitz, Finsterwald & Partner GbR

(57) **Zusammenfassung**

Bei einem Verfahren zur Kompression von Bilddaten, die eine Vielzahl von Pixelwerten umfassen, die einem jeweiligen Pixel zugeordnet sind, werden für zumindest einige Pixel die Pixelwerte gemäß den folgenden Schritten kodiert:
- Ermitteln eines geschätzten Pixelwerts des betreffenden Pixels in Abhängigkeit von dem Pixelwert zumindest eines vorbestimmten anderen Pixels unter Verwendung wenigstens einer Schätzregel; und
- Bilden eines Differenzwerts des betreffenden Pixels, der einer vorbestimmten Relation zwischen dem Pixelwert und dem geschätzten Pixelwert des betreffenden Pixels entspricht, und Quantisieren des Differenzwerts gemäß einer Differenzwert-Quantisierungsregel.

Die quantisierten Differenzwerte der Pixel werden gemäß einer Komprimierregel komprimiert.

## Beschreibung

Die Erfindung betrifft ein Verfahren zur Kompression von Bilddaten, die eine Vielzahl von Pixelwerten umfassen, die einem jeweiligen Pixel zugeordnet sind.

Derartige Bilddaten werden typischerweise in einer elektronischen Kamera, insbesondere einer digitalen Bewegtbildkamera, mittels eines Bildsensors erzeugt. Der Bildsensor umfasst üblicherweise eine Vielzahl von lichtempfindlichen Sensorelementen, die in Zeilen und Spalten angeordnet sind und einem jeweiligen Pixel (Bildpunkt) entsprechen. Die Sensorelemente erzeugen in Abhängigkeit von dem einfallenden Licht elektrische Signale, die einem jeweiligen Helligkeitswert entsprechen. Die Sensorelemente können mit einem Muster von Farbfiltern versehen sein, so dass jeder Helligkeitswert einem Farbkanal zugeordnet ist, insbesondere Rot, Grün und Blau. Hierfür ist das so genannte Bayer-Muster bekannt, bei dem in einer regelmäßigen Anordnung jeweils ein Rot-Filterelement, zwei Grün-Filterelemente und ein Blau-Filterelement vorgesehen sind.

Mit zunehmender Ortsauflösung, d.h. mit zunehmender Anzahl von Pixeln je Bild ist das Volumen der Bilddaten bei modernen Kameras erheblich angestiegen. Es gelangen deshalb Kompressionsverfahren zur Anwendung, um die in der Kamera erzeugten Bilddaten zu komprimieren und in komprimierter Form in einen Speicher der Kamera zu schreiben oder an einen externen Speicher auszugeben. Die komprimierten Bilddaten können später wieder dekomprimiert werden. Hierfür sind verlustfreie und verlustbehaftete Kompressionsverfahren sowie Kombinationen hiervon bekannt.

Insbesondere ist es bekannt, die Bilddaten in den Frequenzraum zu transformieren (z.B. durch Diskrete Cosinus-Transformation gemäß JPEG oder mit Hilfe von Wavelets gemäß JPEG 2000), wobei die Repräsentierung im Frequenzraum durch Koeffizienten erfolgt, die jeweils die Amplitude von bestimmten Frequenzen beschreiben. Um die Daten zu komprimieren, werden diese Koeffizienten frequenzabhängig quantisiert, wobei die den hohen Frequenzen entsprechenden Koeffizienten ungenau übertragen oder verworfen werden. Hierdurch werden feine und hochfrequente Strukturen im Bild entfernt. Derartig komprimierte Bilder haben daher oftmals einen sehr glatten, verwaschenen und leicht unscharfen Bildeindruck. Die bei der Kompression entstehenden Bildfehler sind schlecht vorhersagbar und beschränken sich zudem nicht auf einzelne Pixel, sondern treten als zusätzliche Strukturen (so genannte Artefakte) auf. Außerdem ist die Transformation in den Frequenzraum mit hohem Rechenaufwand verbunden, so dass schnelle Implementierungen, wie sie beispielsweise für Bewegtbildkameras erforderlich sind, mit einem entsprechend hohen technischen Aufwand verbunden sind.

Eine andere Art von Bilddatenkompression erfolgt bei der Kodierung als so genanntes GIF-Bild. Hierbei findet keine Frequenzraumtransformation statt, sondern die Helligkeitsauflösung wird auf wenige Stufen reduziert. Der bei der Quantisierung eines Pixels entstehende Fehler wird nachfolgend bei der Bearbeitung weiterer Pixel berücksichtigt, um diesen Fehler im Mittel auszugleichen (so genanntes Dithering). Dieses Verfahren ist zwar einfach zu implementieren, die dekomprimierten Bilder sind aber sehr stark verrauscht, und der Kompressionsfaktor ist bei natürlichen Bildern, wie sie beispielsweise eine elektronische Kamera erzeugt, vergleichsweise gering.

Es ist eine Aufgabe der Erfindung, ein Kompressionsverfahren zu schaffen, das bei geringem Rechenaufwand bei niedrigem bis mittlerem Kompressionsfaktor eine gute Qualität der dekomprimierten Bilder erreicht und die Ausbildung von Artefakten vermeidet.

Diese Aufgabe wird durch ein Verfahren mit den Merkmalen des Anspruchs 1 gelöst, insbesondere dadurch, dass für zumindest einige Pixel die Pixelwerte gemäß den folgenden Schritten kodiert werden:
(b) Ermitteln eines geschätzten Pixelwerts des betreffenden Pixels in Abhängigkeit von dem Pixelwert zumindest eines vorbestimmten anderen Pixels unter Verwendung wenigstens einer Schätzregel; und
(d) Bilden eines Differenzwerts des betreffenden Pixels, der einer vorbestimmten Relation zwischen dem Pixelwert und dem geschätzten Pixelwert des betreffenden Pixels entspricht, und Quantisieren des Differenzwerts gemäß einer Differenzwert-Quantisierungsregel; wobei die quantisierten Differenzwerte der Pixel gemäß einer Komprimierregel komprimiert werden.

Zusammengefasst wird bei dem Kompressionsverfahren zunächst eine Kodierung der Pixelwerte für wenigstens einige der Pixel durchgeführt. Bei diesen Pixelwerten kann es sich im Zusammenhang mit der Erfindung unmittelbar um den jeweiligen Helligkeitswert des betreffenden Pixels handeln, oder der jeweilige Pixelwert wurde vor der Kodierung oder wird während der Kodierung gemäß einer Helligkeitswert-Quantisierungsregel quantisiert und liegt somit als ein quantisierter Helligkeitswert, d.h. als ein so genannter Indexwert vor. Alternativ hierzu kann es sich bei dem jeweiligen Pixelwert auch um einen modifizierten Helligkeitswert oder einen modifizierten Indexwert handeln, beispielsweise wenn der Helligkeitswert oder Indexwert einer Farbe (z.B. Rot oder Blau) vor dem Komprimieren mit dem Helligkeitswert oder Indexwert einer anderen Farbe (z.B. Grün) verrechnet wird (z.B. durch Bildung einer Differenz oder eines Quotienten). Während der Kodierung erfolgt anhand der Pixelwerte die Bildung von Differenzwerten, die zugleich oder in einem separaten Schritt quantisiert werden. Die genannte Kodierung der Pixelwerte entspricht somit einer verlustbehafteten Kompression. Die aus diese Kodierung resultierenden Werte, die so genannten quantisierten Differenzwerte, werden danach gemäß einer vorbestimmten Komprimierregel komprimiert, vorzugsweise verlustfrei, beispielsweise nach der Huffman-Kodierung oder einer arithmetischen Kodierung.

Im Einzelnen wird im Rahmen der Kodierung in einem Schritt (b) für den jeweilige Pixel ein geschätzter Pixelwert ermittelt, d.h. es wird ein Schätzwert vorhergesagt. Dieser Vorhersage wird unter Verwendung wenigstens einer-vorbestimmten Schätzregel zumindest der Pixelwert eines anderen Pixels zugrunde gelegt; wobei dieser andere Pixel in einer vorbestimmten Anordnung mittelbar oder unmittelbar benachbart zu dem aktuell betrachteten Pixel (für den gerade die Kodierung durchgeführt wird) vorgesehen ist. In "vorbestimmter Anordnung" bedeutet in diesem Zusammenhang, dass die Lage des betrachteten anderen Pixels definiert ist und somit auch bei dem späteren Dekodieren bekannt ist. Vorzugsweise werden für diese Schätzung die Pixelwerte mehrerer vorbestimmter anderer Pixel berücksichtigt. Mit anderen Worten wird in dem Schritt (b) trotz Kenntnis des Pixelwerts des betrachteten Pixels dieser Pixelwert anhand einer vorbestimmten Pixelwert-Umgebung vorhergesagt, wobei dies gemäß einer oder mehreren vorbestimmten Vorschriften (so genannte Schätzregel) geschieht.

In einem Schritt (d) wird ein Differenzwert gebildet, der der Differenz zwischen dem Pixelwert und dem geschätzten Pixelwert des betreffenden Pixels entspricht. Mit anderen Worten entspricht dieser Differenzwert letztlich einem Fehler der durchgeführten Vorhersage. Bei dem genannten Differenzwert kann es sich exakt um die Differenz zwischen dem Pixelwert und dem geschätzten Pixelwert handeln, die durch eine Subtraktion gebildet wird. Dies ist jedoch nicht zwingend der Fall. Insbesondere können der Pixelwert und der geschätzte Pixelwert alternativ auch nicht-linear miteinander verrechnet werden, beispielsweise durch Verwendung einer Nachschlagetabelle (so genannte Look-Up-Tabelle, LUT). Beispielsweise kann vorgesehen sein, dass große Differenzen zwischen dem Pixelwert und dem geschätzten Pixelwert anders behandelt werden als relativ kleinere Differenzen.

In dem genannten Schritt (d) erfolgt auch ein Quantisieren des jeweiligen Differenzwerts, d.h. die Differenzwerte werden vorbestimmten Quantisierungsstufen zugeordnet. Die hierbei verwendete Differenzwert-Quantisierungsregel legt fest, welcher Quantisierungsstufe ein jeweiliger Differenzwert zugeordnet wird. Hierbei ist die Anzahl der vorgesehenen Quantisierungsstufen typischerweise geringer als die Anzahl der möglichen Differenzwerte. Das genannte Bilden eines Differenzwerts und Quantisieren des jeweiligen Differenzwerts kann in einem einzigen gemeinsamen Schritt erfolgen (beispielsweise durch Verwenden einer Nachschlagetabelle), oder die beiden Vorgänge werden separat voneinander nacheinander durchgeführt.

Bei dem bereits erwähnten nachfolgenden Komprimieren werden die quantisierten Differenzwerte der Pixel gemäß einer vorbestimmten Komprimierregel (vorzugsweise verlustfrei) komprimiert. Hierfür kann ein bekanntes Komprimierverfahren verwendet werden. Insbesondere kann hierbei auch eine Steuerung der Komprimierrate vorgesehen sein (so genannte "bit rate control"). Die somit komprimierten Bilddaten besitzen eine verringerte Datenmenge und können in dieser Form in der Kamera gespeichert oder an ein externes Speichermedium ausgegeben werden.

Ein Vorteil des Verfahrens besteht darin, dass die genannten Differenzwerte relativ klein sind, insbesondere im Vergleich zu den Pixelwerten. Wie erläutert entsprechen die Differenzwerte nämlich lediglich der Abweichung der Vorhersage von dem tatsächlichen Pixelwert. Da die Differenzwerte relativ gering sind, ergibt sich eine verbesserte Effizienz des erläuterten nachfolgenden Komprimierens gemäß der vorbestimmten Komprimierregel. Somit wird insgesamt ein verbesserter Kompressionsfaktor erreicht.

Um die genannten Differenzwerte bilden zu können, müssen zuvor gemäß dem Schritt (b) die geschätzten Pixelwerte vorhergesagt werden. Da dies in Abhängigkeit von dem jeweiligen Pixelwert von vorbestimmten anderen Pixeln geschieht, kann auch bei einer nachfolgenden Dekompression der Bilddaten basierend auf den bereits dekodierten Pixelwerten eine entsprechende Vorhersage vorgenommen werden. Hierbei werden die vorstehend erläuterten Schritte in angepasster Weise und Reihenfolge durchgeführt, um einen jeweiligen weiteren dekodierten Pixelwert zu erhalten.

Auf diese Weise kann die spätere Dekompression der Bilddaten beispielsweise dadurch erfolgen, dass zunächst die erläuterten quantisierten Differenzwerte der Pixel gemäß einer vorbestimmten Dekomprimierregel dekomprimiert werden, wobei diese Dekomprimierregel einer Umkehrung der zuvor angewandten Komprimierregel entspricht, und wobei die Pixelwerte nachfolgend gemäß den folgenden Schritten dekodiert werden:
(e) Ermitteln eines nachgebildeten geschätzten Pixelwerts des betreffenden Pixels in Abhängigkeit von zumindest einem zuvor dekodierten Pixelwert, der dem zumindest einen vorbestimmten anderen Pixel entspricht, unter Verwendung der wenigstens einen Schätzregel; und
(g) Ermitteln eines rücktransformierten Differenzwerts des betreffenden Pixels in Abhängigkeit von dem dekomprimierten quantisierten Differenzwert unter Verwendung einer Differenzwert-Rücktransformationsregel, die einer Umkehrung der Differenzwert-Quantisierungsregel entspricht, und Ermitteln eines dekodierten Pixelwerts des betreffenden Pixels in Abhängigkeit von dem rücktransformierten Differenzwert und dem nachgebildeten geschätzten Pixelwert des betreffenden Pixels

Mit anderen Worten werden die Bilddaten zunächst dekomprimiert, um wieder die dem vorherigen Komprimieren zugrunde liegenden quantisierten Differenzwerte zu erhalten. Danach erfolgt eine Dekodierung der Pixelwerte, wobei die bei der Kodierung durchgeführten Schritte in entsprechend angepasster Reihenfolge umgekehrt bzw. nachgebildet werden. Zum einen erfolgt in dem Schritt (e) analog zu der Vorhersage gemäß Schritt (b) des Kodierens das Ermitteln eines so genannten nachgebildeten geschätzten Pixelwerts des jeweiligen Pixels, und zwar wiederum in Abhängigkeit zumindest von einem (oder mehreren) Pixelwert des vorbestimmten anderen Pixels, der auch beim Kodieren gemäß Schritt (b) berücksichtigt wurde. Hierbei wird auch dieselbe Schätzregel verwendet wie bei dem vorherigen Kodieren gemäß Schritt (b). Allerdings wird nun nicht auf den tatsächlichen Pixelwert zurückgegriffen (da dieser nicht zur Verfügung steht), sondern auf einen zuvor bereits dekodierten Pixelwert. Mit anderen Worten kann der Schritt (e) nur für diejenigen Pixel durchgeführt werden, für die der Pixelwert des vorbestimmten anderen Pixels bereits dekodiert worden ist (oder ein geeigneter Ersatzwert vorliegt, wie nachfolgend noch erläutert wird).

Zum anderen wird in dem Schritt (g) für den betreffenden Pixel ein rücktransformierter Differenzwert ermittelt, und zwar in Abhängigkeit von dem dekomprimierten quantisierten Differenzwert unter Verwendung einer Differenzwert-Rücktransformationsregel, die einer Umkehrung der bei der Kodierung verwendeten Differenzwert-Quantisierungsregel entspricht. Der nachgebildete geschätzte Pixelwert gemäß Schritt (e) wird in dem Schritt (g) mit dem rücktransformierten Differenzwert verrechnet, um den dekodierten Pixelwert des jeweiligen Pixels zu ermitteln. Beispielsweise wird der rücktransformierte Differenzwert auf den nachgebildeten geschätzten Pixelwert aufaddiert oder von dem nachgebildeten geschätzten Pixelwert subtrahiert, entsprechend einer Umkehrung der Bildung des Differenzwerts gemäß dem Schritt (d). Mit anderen Worten wird die beim Kodieren vorgenommene Schätzung nun letztlich dazu verwendet, um von dem nachgebildeten geschätzten Pixelwert auf den tatsächlichen Pixelwert zurückzurechnen.

Das genannte Ermitteln eines rücktransformierten Differenzwerts und Ermitteln eines dekodierten Pixelwerts kann in einem einzigen gemeinsamen Schritt erfolgen (beispielsweise durch Verwenden einer Nachschlagetabelle), oder die beiden Vorgänge werden separat voneinander nacheinander durchgeführt.

Im Ergebnis kann also durch Verwendung eines Schätzers, der aus einem bereits kodierten Teil des Bildes die Helligkeit (Pixelwert) des aktuell bearbeiteten Pixels vorausschätzt, ein Kontext zwischen den betrachteten Pixelwerten im Ortsbereich ausgenutzt werden, d.h. ohne vorhergehende Transformation in den Frequenzraum. Die verwendete Schätzregel kann beispielsweise auf der Annahme basieren, dass die Helligkeit eines Pixels häufig ähnlich ist wie die Helligkeit der Umgebung dieses Pixels, wobei als Wert für die Vorhersage beispielsweise die mittlere Helligkeit der Umgebung verwendet wird. Da die Kompression somit ohne Frequenzraumtransformation erfolgt, bleiben Kompressionsfehler auf einzelne Pixel beschränkt, und die Auswirkung der Kompression auf das Bild ist besser vorhersagbar. Das Bild wird auch bei höheren Kompressionsfaktoren nicht "unscharf". Es können konkrete Qualitätsvorgaben eingehalten werden, wie beispielsweise dass das Rauschen im Mittel um höchstens 50 % erhöht werden darf.

Damit die Dekodierung möglichst exakt erfolgen kann, ist es erforderlich, für die Kodierung nur die Information zu verwenden, die auch bei der späteren Dekodierung zu dem jeweiligen Zeitpunkt zur Verfügung steht. Insbesondere soll die verwendete Schätzregel nur auf Grundlage von Pixelwerten arbeiten, die zuvor bereits kodiert und wieder dekodiert worden sind. Es ist deshalb bevorzugt, wenn vor dem Ermitteln des geschätzten Pixelwerts des aktuell betrachteten Pixels in Abhängigkeit von dem Pixelwert des vorbestimmten anderen Pixels in dem genannten Schritt (b) der Pixelwert des genannten vorbestimmten anderen Pixels zunächst kodiert und wieder dekodiert wird. Somit besitzt beim Kodieren der jeweilige Pixelwert des vorbestimmten anderen Pixels denselben Wert, wie er auch für das Schätzen beim späteren Dekodieren des Pixelwerts des betreffenden Pixels zur Verfügung steht (also in dem Schritt (e): nachgebildeter geschätzter Pixelwert). Hierdurch wird eine höhere Genauigkeit des Verfahrens erreicht.

Vorteilhafte Ausführungsformen der Erfindung sind nachfolgend und in den Unteransprüchen beschrieben.

Gemäß einer einfachen Ausführungsform wird für das Quantisieren sämtlicher Differenzwerte stets dieselbe, d.h. eine einzige gemeinsame Differenzwert-Quantisierungsregel verwendet, um den jeweiligen quantisierten Differenzwert zu ermitteln. Alternativ hierzu kann jedoch für das Quantisieren eines jeweiligen Differenzwerts innerhalb desselben Bildes oder für verschiedene Bilder nach einer vorbestimmten Auswahlregel jeweils wenigstens eine von mehreren verschiedenen Differenzwert-Quantisierungsregeln ausgewählt werden.

Gemäß einer weiteren Ausführungsform wird nicht für jedes Pixel der Differenzwert gemäß dem genannten Schritt (d) quantisiert und nachfolgend komprimiert, sondern der genannte Schritt (d) kann stattdessen fallweise modifiziert werden. Insbesondere ist es möglich, dass der in dem Schritt (d) gebildete Differenzwert mit einem vorbestimmten Schwellenwert verglichen wird. Falls der Differenzwert betragsmäßig größer ist als der Schwellenwert, so wird anstelle des Differenzwerts ein Ersatzwert quantisiert (vorzugsweise gemäß der genannten Differenzwert-Quantisierungsregel) und nachfolgend komprimiert (gemäß der genannten Komprimierregel). Hierdurch wird also in Ausnahmefällen anstelle des gebildeten Differenzwerts ein Ersatzwert für die weitere Signalverarbeitung (Quantisieren und Komprimieren) verwendet, der vorzugsweise kleiner ist als oder genauso groß ist wie der genannte Schwellenwert. Hierdurch kann die Effizienz des Komprimierens noch weiter verbessert werden. Eine derartige Ausnahmeregel muss dann natürlich auch bei dem späteren Dekodieren der Pixelwerte analog berücksichtigt werden.

Gemäß einer vorteilhaften Ausführungsform werden gemäß der im Schritt (d) verwendeten Differenzwert-Quantisierungsregel Differenzwerte mit größeren Absolutbeträgen gröber quantisiert werden als Differenzwerte mit relativ kleineren Absolutbeträgen. Mit anderen Worten wird für betragsmäßig größere Differenzwerte ein größeres Intervall von Differenzwerten einer vorbestimmten Quantisierungsstufe zugeordnet als für betragsmäßig kleinere Differenzwerte. Durch ein derartiges Quantisieren der Differenzwerte wird nicht nur eine erhebliche Reduzierung der Datenmenge erreicht. Vor allem erfolgt ein Informationsverlust lediglich in solchen Bildbereichen, in denen ohnehin nur ein geringer Anteil der gesamten Bildinformation vorhanden ist. Außerdem ist dieser Anteil der Bildinformation für das menschliche Auge ohnehin schwer vorhersagbar. Somit ist diese besondere Art der Quantisierung für das menschliche Auge letztlich nicht oder kaum wahrnehmbar. Gleichwohl wird eine signifikante Reduzierung der Datenmenge erreicht.

Alternativ hierzu kann die Differenzwert-Quantisierungsregel jedoch beispielsweise einer linearen Stufenfunktion entsprechen.

Gemäß einer weiteren Ausführungsform kann in oder nach dem genannten Schritt (d) des Quantisierens des jeweiligen Differenzwerts ein Quantisierungsfehler für den betreffenden Pixel ermittelt werden, wobei der Quantisierungsfehler für das nachfolgende Quantisieren des Differenzwerts zumindest eines anderen (insbesondere eines benachbarten) Pixels berücksichtigt wird. Hierdurch kann erreicht werden, dass für die Vielzahl der Pixelwerte die Summe der Quantisierungsfehler nicht oder nicht übermäßig anwächst, d.h. der sich aus sämtlichen Quantisierungen ergebende Gesamtquantisierungsfehler wird begrenzt.

Der jeweilige Quantisierungsfehler wird vorzugsweise dadurch ermittelt, dass während des Kodierens der Pixelwerte der quantisierte Differenzwert des betreffenden Pixels unter Verwendung einer Differenzwert-Rücktransformationsregel, die einer Umkehrung der Differenzwert-Quantisierungsregel entspricht, rücktransformiert wird, und dass eine jeweilige Differenz zwischen dem rücktransformierten Differenzwert und dem ursprünglichen Differenzwert (d.h. dem noch nicht quantisierten Differenzwert des betreffenden Pixels) gebildet wird. Der für den betreffenden Pixel ermittelte Quantisierungsfehler kann für das spätere Quantisieren des Differenzwerts zumindest eines anderen Pixels beispielsweise derart berücksichtigt werden, dass der Quantisierungsfehler teilweise oder vollständig auf den Differenzwert des jeweiligen anderen Pixels aufaddiert oder von dem Differenzwert subtrahiert wird (je nach Wahl des Vorzeichens des Quantisierungsfehlers), bevor oder während die Differenzwert-Quantisierungsregel auf diesen Differenzwert angewendet wird.

Alternativ hierzu kann der für den betreffenden Pixel ermittelte Quantisierungsfehler für das spätere Quantisieren des Differenzwerts zumindest eines anderen Pixels derart berücksichtigt werden, dass für den quantisierten Differenzwert des jeweiligen anderen Pixels eine Quantisierungskorrektur durchgeführt wird (in Abhängigkeit von der Größe des ermitteltten Quantisierungsfehlers), nachdem die Differenzwert-Quantisierungsregel auf den Differenzwert des jeweiligen anderen Pixels angewendet worden ist. Mit anderen Worten wird das Quantisieren des Differenzwerts des jeweiligen anderen Pixels als Rundung angesehen, da der Differenzwert einer von mehreren Quantisierungsstufen zugeordnet wird (Auf- oder Abrunden). Diese Rundung wird in Abhängigkeit von dem ermittelten Quantisierungsfehler gegebenenfalls korrigiert. Beispielsweise kann ein Quantisierungsrestwert auf den für den betreffenden Pixel ermittelten Quantisierungsfehler aufaddiert oder von dem Quantisierungsfehler subtrahiert werden, um einen modifizierten Quantisierungsfehler zu ermitteln. Der genannte Quantisierungsrestwert wird hierfür in Abhängigkeit von dem quantisierten Differenzwert des jeweiligen anderen Pixels ermittelt, und der ermittelte Quantisierungsfehler wird vor dem Addieren oder Subtrahieren des Quantisierungsrestwerts vorzugsweise entsprechend der Differenzwert-Quantisierungsregel umgerechnet, damit beide Werte (Quantisierungsfehler und Quantisierungsrestwert) zueinander normiert sind. Bei dieser Ausführungsform wird der quantisierte Differenzwert des jeweiligen anderen Pixels um eine positive oder negative Quantisierungsstufe inkrementiert (= Quantisierungskorrektur), falls der modifizierte Quantisierungsfehler einen vorbestimmten Schwellenwert überschreitet oder unterschreitet. Beispielsweise kann bei einer besonders einfachen Ausführungsform nach dem Quantisieren des Differenzwerts des jeweiligen anderen Pixels der genannte Quantisierungsrestwert auf einfache Weise als der Wert einer vorbestimmten Anzahl von niedrigstwertigen Bits des quantisierten Differenzwerts ermittelt werden (z.B. Nachkommawert), wobei dieser Quantisierungsrestwert auf den (mittels der Differenzwert-Quantisierungsregel umgerechneten) Quantisierungsfehler aufaddiert wird (= modifizierter Quantisierungsfehler), und wobei der quantisierte Differenzwert des jeweiligen anderen Pixels um eine positive Einheit inkrementiert wird, falls der modifizierte Quantisierungsfehler einen vorbestimmten Schwellenwert (z.B. Schwellenwert 0,5) überschreitet.

Der Quantisierungsfehler wird bei sämtlichen dieser-Ausführungsformen also dazu benutzt, für das spätere Quantisieren des Differenzwerts zumindest eines anderen Pixels die Anwendung der Differenzwert-Quantisierungsregel zu modifizieren, um für die Vielzahl der Pixelwerte den Gesamtquantisierungsfehler zu begrenzen. Hierbei kann der für den betreffenden Pixel ermittelte jeweilige Quantisierungsfehler für das spätere Quantisieren des Differenzwerts des jeweiligen anderen Pixels stets lediglich als Einzelwert berücksichtigt werden (d.h. ohne Berücksichtigung auch der zuvor ermittelten Quantisierungsfehler), oder die ermittelten Quantisierungsfehler werden akkumuliert, so dass der Quantisierungsfehler generell in akkumulierter Form berücksichtigt wird.

Der erläuterte Quantisierungsfehler kann auch in vorteilhafter Weise berücksichtigt werden, wenn die Pixel in mehreren Zeilen und Spalten angeordnet sind, wobei die Spalten mehreren Spaltengruppen zugeordnet sind, von denen jede mehrere Spalten umfasst. Bei einer derartigen Ausführungsform können die Pixelwerte innerhalb einer jeden Spaltengruppe zeilenweise kodiert werden, und die Pixelwerte der verschiedenen Spaltengruppen können parallel kodiert werden. Hierfür kann für jede Spaltengruppe eine eigene Bearbeitungseinheit vorgesehen sein, so dass das Kodieren besonders schnell erfolgen kann. Die einzelnen Bearbeitungseinheiten können hierbei sogar mit einer relativ geringen Geschwindigkeit arbeiten, wodurch sich insgesamt eine vergleichsweise geringe Verlustleistung ergibt, die bei elektronischen Schaltkreisen überproportional mit der Taktfrequenz ansteigt. Um trotz einer derartigen Unterteilung der Spalten in Spaltengruppen den jeweiligen Quantisierungsfehler möglichst wirkungsvoll zu berücksichtigen, wird nach Erreichen eines jeweiligen Zeilenendes in einer der mehreren Spaltengruppen ein in der Spaltengruppe ermittelter Quantisierungsfehler für das Kodieren der betreffenden Zeile oder einer nachfolgenden Zeile in wenigstens einer benachbarten Spaltengruppe verwendet. Mit anderen Worten wird der für eine Zeile innerhalb einer Spaltengruppe ermittelte Quantisierungsfehler an die benachbarte Spaltengruppe oder die benachbarten Spaltengruppen (bzw. deren Bearbeitungseinheiten) weitergegeben, damit der jeweilige Quantisierungsfehler Spaltengruppen-übergreifend auch dort berücksichtigt werden kann, um den Gesamtquantisierungsfehler zu begrenzen. Natürlich kann der jeweilige Quantisierungsfehler zusätzlich auch in der ursprünglichen Spaltengruppe für das Kodieren einer nachfolgenden Zeile verwendet werden.

Wie bereits erwähnt, kann es sich bei den zu kodierenden Pixelwerten unmittelbar um den jeweiligen Helligkeitswert des betreffenden Pixels handeln. Alternativ hierzu kann der jeweilige Pixelwert jedoch bereits vor dem Kodieren quantisiert worden sein, oder der jeweilige Pixelwert wird während des Kodierens gemäß einer Helligkeitswert-Quantisierungsregel quantisiert. Ein derartiger quantisierter Pixelwert wird im Zusammenhang mit der Erfindung auch als Indexwert bezeichnet. Im Falle der letztgenannten Alternative umfasst das Kodieren der Pixelwerte vor dem Bilden des Differenzwerts des betreffenden Pixels zusätzlich den Schritt:
(a) Quantisieren des Pixelwerts des betreffenden Pixels unter Verwendung wenigstens einer Helligkeitswert-Quantisierungsregel;

Das Ermitteln des geschätzten Pixelwerts des betreffenden Pixels gemäß dem vorgenannten Schritt (b) erfolgt in diesem Fall in Abhängigkeit von dem quantisierten Pixelwert - d.h. in Abhängigkeit von dem Indexwert - des zumindest einen vorbestimmten anderen Pixels unter Verwendung der wenigstens einen Schätzregel. Dies ist erforderlich, da in diesem Fall auch bei dem späteren Dekodieren für das Ermitteln des nachgebildeten geschätzten Pixelwerts in dem nachstehend noch erläuterten Schritt (e) auf den quantisierten Pixelwert (d.h. auf den dekodierten Indexwert) des jeweiligen vorbestimmten anderen Pixels zurückgegriffen wird. Der in dem Schritt (b) ermittelte geschätzte Pixelwert entspricht somit ebenfalls einem quantisierten Wert, d.h. einem geschätzten Indexwert. Das Bilden des Differenzwerts des betreffenden Pixels in dem Schritt (d) erfolgt dann anhand der quantisierten Pixelwerte, d.h. anhand der genannten Indexwerte, wobei in diesem Fall der Differenzwert nachfolgend auch als Indexdifferenzwert bezeichnet wird.

Die für das Quantisieren des Pixelwerts verwendete Helligkeitswert-Quantisierungsregel legt fest, welcher Quantisierungsstufe ein jeweiliger Pixelwert zugeordnet wird. Gemäß einer Ausführungsform kann für sämtliche der Pixelwerte eine einzige gemeinsame Helligkeitswert-Quantisierungsregel verwendet werden, um den jeweiligen Indexwert zu ermitteln. Hierdurch ergibt sich eine besonders einfache Kodierung. Alternativ hierzu ist es allerdings möglich, für unterschiedliche Pixelwerte wenigstens eine von mehreren verschiedenen Helligkeitswert-Quantisierungsregeln auszuwählen. Die Auswahl kann beispielsweise in Abhängigkeit von der Art der zu komprimierenden Bilddaten erfolgen, beispielsweise um eine angepasste rauschoptimierte Quantisierung vorzunehmen, wie vorstehend erläutert. Insbesondere kann hierbei zwischen Bilddaten eines elektronischen Bildsensors einer Kamera und Bilddaten eines eingescannten fotographischen Films unterschieden werden. Die Auswahl einer jeweiligen Helligkeitswert-Quantisierungsregel kann einheitlich für ein gesamtes Bild erfolgen. Allerdings können auch innerhalb desselben Bildes nach einer vorbestimmten Auswahlregel verschiedene Helligkeitswert-Quantisierungsregel für unterschiedliche Pixel ausgewählt werden.

Das zusätzliche Rauschen, das durch die Quantisierung der Pixelwerte entsteht, wirkt eher wie Filmkorn und wird deshalb nicht als störend empfunden, insbesondere wenn die Quantisierung rauschoptimiert in Abhängigkeit von dem jeweiligen Pixelwert durchgeführt wird, wie nachfolgend noch erläutert wird.

Für das Quantisieren der Pixelwerte in dem vorgenannten Schritt (ä) kann vorgesehen sein, dass gemäß der Helligkeitswert-Quantisierungsregel größere Pixelwerte gröber quantisiert werden als relativ kleinere Pixelwerte. Ähnlich zu der bereits erläuterten Differenzwert-Quantisierungsregel wird für größere Pixelwerte also ein größeres Intervall von Pixelwerten einer vorbestimmten Quantisierungsstufe (Indexwert) zugeordnet als für betragsmäßig kleinere Pixelwerte. Hierdurch wird nicht nur eine Reduktion der Datenmenge erzielt, sondern für eine elektronische Kamera auch eine Rauschoptimierung der Quantisierung.

Die von einem Sensorelement eines elektronischen Bildsensors erzeugten Helligkeitssignale, die den genannten Pixelwerten entsprechen, enthalten zusätzlich zu einem festen Rauschanteil, der beispielsweise aus der Ausleseelektronik des Sensors resultiert, nämlich auch Photonenrauschen. Dieses Rauschen hat eine Standardabweichung, die der Wurzel aus der Anzahl der Photonen entspricht, welche das Helligkeitssignal erzeugen. Dies bedeutet, dass das Rauschen des Sensors im Dunklen (niedrige Pixelwerte) gering ist, jedoch mit zunehmender Helligkeit (höhere Pixelwerte) anwächst. Indem die Quantisierung für höhere Pixelwerte gröber gewählt ist als für niedrigere Pixelwerte, folgt die der Quantisierung zugrunde liegende Abstufung (d.h. die Abstände zwischen den genannten Indexwerten), dem Verhalten des Sensorrauschens. Somit wird die für höhere Pixelwerte vergleichsweise grobe Quantisierung aufgrund des ebenfalls erhöhten Photonenrauschens nicht wahrgenommen, sie führt jedoch zu einer stärkeren Verminderung der Datenmenge. Die verwendete Helligkeitswert-Quantisierungsregel kann insbesondere einer Wurzelfunktion oder einem sonstigen degressiven Verlauf der Abhängigkeit der Indexwerte von den Pixelwerten entsprechen, um das Verhalten des Photonenrauschens nachzubilden.

Alternativ hierzu kann eine verlustlose Quantisierung der Pixelwerte, d.h. ohne Reduktion der Datenmenge vorgesehen sein (z.B. Konvertierung der Pixelwerte von 16 Bit auf 16 Bit), insbesondere um eine Kennlinie der verwendeten Kamera anzupassen oder zu modifizieren (Anpassung an die Charakteristik der Bilddatenquelle).

Im Falle des erläuterten Quantisierens der Pixelwerte kann analog zu dem Ermitteln und Berücksichtigen eines Quantisierungsfehlers bei dem Quantisieren der Differenzwerte (und zwar zusätzlich oder alternativ hierzu) ein Quantisierungsfehler für den betreffenden Pixel ermittelt werden, wobei der Quantisierungsfehler für das nachfolgende Quantisieren des Pixelwerts zumindest eines anderen (insbesondere benachbarten) Pixels berücksichtigt wird. Ein Quantisierungsfehler wird also auch in diesem Fall vorzugsweise dadurch ermittelt, dass während des Kodierens der Pixelwerte die ermittelten quantisierten Pixelwerte (Indexwerte) des jeweiligen Pixels unter Verwendung einer Pixelwert-Rücktransformationsregel, die einer Umkehrung der Helligkeitswert-Quantisierungsregel entspricht, wieder rücktransformiert werden, wobei die jeweilige Differenz zwischen dem rücktransformierten Pixelwert und dem ursprünglichen Pixelwert gebildet wird. Die ermittelten Quantisierungsfehler werden dazu verwendet, für das spätere Ermitteln des jeweiligen quantisierten Pixelwerts von weiteren Pixeln die Anwendung der Helligkeitswert-Quantisierungsregel derart zu modifizieren, dass die Summe der Quantisierungsfehler nicht oder nicht übermäßig anwächst. Dies kann insbesondere durch entsprechend angepasste Auswahl der jeweiligen Quantisierungsstufe geschehen, oder dadurch, dass der ermittelte Quantisierungsfehler teilweise oder vollständig auf den Pixelwert des jeweiligen weiteren Pixels aufaddiert oder von dem Pixelwert subtrahiert wird, bevor oder während die Helligkeitswert-Quantisierungsregel auf diesen Pixelwert angewendet wird.

Gemäß einer weiteren Ausführungsform erfolgt das Ermitteln des geschätzten Pixelwerts des betreffenden Pixels in Abhängigkeit von dem jeweiligen Pixelwert mehrerer vorbestimmter anderer Pixel, wobei ein Teil dieser Pixel unmittelbar benachbart zu dem betreffenden Pixel angeordnet ist und ein weiterer Teil dieser Pixel lediglich mittelbar benachbart zu dem betreffenden Pixel angeordnet ist. Mit anderen Worten werden für die Vorhersage des geschätzten Pixelwerts gemäß Schritt (b) während des Kodierens die Pixelwerte mehrerer Pixel berücksichtigt, die zu dem betrachteten Pixel benachbart angeordnet sind. Ein "benachbarter" Pixel muss in Zusammenhang mit der Erfindung nicht zwangsläufig unmittelbar benachbart zu dem betreffenden Pixel angeordnet sein, sondern ein Teil der berücksichtigten Pixel kann auch lediglich mittelbar benachbart zu dem betreffenden Pixel angeordnet sein, d.h. wenigstens ein Pixel liegt zwischen dem betreffenden Pixel und dem mittelbar benachbarten Pixel. Insbesondere kann zwischen dem betreffenden Pixel und dem vorbestimmten anderen Pixel eine Zeile von Pixeln liegen, deren Pixelwerte für das Kodieren des Pixelwerts des betreffenden Pixels nicht berücksichtigt werden. Entsprechendes gilt natürlich auch für das Dekodieren der Pixelwerte, da beim Dekodieren grundsätzlich dieselben vorbestimmten anderen Pixel berücksichtigt werden, die auch beim Kodieren berücksichtigt worden sind.

Gemäß einer bevorzugten Ausführungsform sind die Pixel in einer Anordnung von mehreren Zeilen vorgesehen, wobei die Pixelwerte zeilenweise kodiert werden, und wobei das Ermitteln des geschätzten Pixelwerts des betreffenden Pixels in Abhängigkeit von dem jeweiligen Pixelwert mehrerer vorbestimmter anderer Pixel erfolgt, die in einer bereits kodierten Zeile angeordnet sind. Diese bereits kodierte Zeile ist benachbart zu derjenigen Zeile angeordnet, in der der betreffende (aktuell betrachtete) Pixel angeordnet ist. Mit anderen Worten basiert die Vorhersage des geschätzten Pixelwerts gemäß Schritt (b) wiederum auf der Berücksichtigung der Pixelwerte mehrerer anderer Pixel, wobei diese vorbestimmten anderen Pixel zumindest in einer Zeile angeordnet sind. Diese Zeile befindet sich benachbart zu derjenigen Zeile, in der der betrachtete Pixel angeordnet ist (für den die Kodierung aktuell vorgenommen wird). Somit kann die für das Vorhersagen des geschätzten Pixelwerts betrachtete Umgebung in einer zuvor bereits kodierten (und wieder dekodierten) Zeile liegen. Analog hierzu können auch mehrere bereits kodierte (und wieder dekodierte) Zeilen für das Ermitteln des geschätzten Pixelwerts herangezogen werden.

Besonders vorteilhaft ist es, wenn die Pixel in einer Anordnung von mehreren Zeilen vorgesehen sind, wobei die Pixelwerte gemäß einer vorbestimmten Zeilenreihenfolge derart zeilenweise kodiert werden, dass abwechselnd Pixelwerte der jeweiligen drittnächsten Zeile und Pixelwerte der jeweiligen vorhergehenden Zeile kodiert werden (jeweils von der aktuell betrachteten Zeile aus gesehen), wobei für das Kodieren von Pixelwerten der genannten jeweiligen drittnächsten Zeile das Ermitteln des geschätzten Pixelwerts des betreffenden Pixels in Abhängigkeit von dem Pixelwert zumindest eines vorbestimmten anderen Pixels erfolgt, der in der hierzu vorvorhergehenden Zeile angeordnet ist, und wobei für das Kodieren von Pixelwerten der genannten jeweiligen vorhergehenden Zeile das Ermitteln des geschätzten Pixelwerts des betreffenden Pixels in Abhängigkeit von dem jeweiligen Pixelwert mehrerer vorbestimmter anderer Pixel erfolgt, die in der hierzu vorhergehenden Zeile und in der hierzu nächsten Zeile angeordnet sind. Entsprechend wird dann auch beim Dekodieren der Pixelwerte vorgegangen.

Mit anderen Worten basiert die Vorhersage des geschätzten Pixelwerts gemäß Schritt (b) wiederum auf der Berücksichtigung der Pixelwerte mehrerer anderer Pixel, wobei nach zwei Gruppen von Zeilen unterschieden wird: Für das Kodieren der Pixelwerte einer Zeile der ersten Gruppe (z.B. geradzahlige Zeilen) erfolgt das Schätzen in Abhängigkeit von dem jeweiligen Pixelwert eines oder mehrerer Pixel, die aus der Sicht der aktuell betrachteten Zeile in der hierzu (räumlich) vorvorhergehenden Zeile angeordnet sind, die zuvor bereits kodiert worden ist. Dies entspricht letztlich einem "Überspringen" einer Zeile. Hierbei müssen natürlich nicht sämtliche Pixelwerte der genannten vorvorhergehenden Zeile berücksichtigt werden. Es hat sich jedoch gezeigt, dass keine wesentliche Verschlechterung der Vorhersage eintritt, wenn keine Pixelwerte der jeweiligen vorhergehenden Zeile, sondern Pixelwerte lediglich der jeweiligen vorvorhergehenden Zeile berücksichtigt werden. Für das Kodieren der Pixelwerte einer Zeile der zweiten Gruppe (z.B. ungeradzahlige Zeilen) erfolgt das Schätzen hingegen in Abhängigkeit von dem jeweiligen Pixelwert von Pixeln, die aus der Sicht der aktuell betrachteten Zeile in der hierzu (räumlich) vorhergehenden Zeile und in der hierzu (räumlich) nächsten Zeile angeordnet sind, die zuvor bereits kodiert worden sind. Es hat sich gezeigt, dass eine signifikante Verbesserung der Vorhersage eintritt, wenn Pixelwerte sowohl der jeweiligen vorhergehenden Zeile als auch der jeweiligen nächsten Zeile berücksichtigt werden. Auch hierbei müssen allerdings nicht sämtliche Pixelwerte der genannten vorhergehenden und der genannten nächsten Zeile berücksichtigt werden. Natürlich können für die Zeilen der Bildränder Abweichungen von diesem Konzept vorgesehen sein.

Besonders vorteilhaft ist es bei dem erläuterten zeilenweisen Kodieren, wenn innerhalb der jeweiligen Zeile lediglich für jeden zweiten Pixel der geschätzte Pixelwert ermittelt wird, insbesondere zeilenweise um eine Spalte versetzt. Beispielsweise werden in den ungeradzahligen Zeilen lediglich die Pixelwerte der Pixel der ungeradzahligen Spalten kodiert, und in den geradzahligen Zeilen werden lediglich die Pixelwerte der Pixel der geradzahligen Spalten kodiert (oder umgekehrt). Hierdurch entsteht ein Muster von kodierten Pixeln, für welche die vier diagonal benachbarten Pixel ebenfalls bereits kodiert worden sind und die vier unmittelbar benachbarten Pixel (d.h. die zwei horizontal benachbarten und die zwei vertikal benachbarten Pixel) noch nicht kodiert worden sind. Selbstverständlich können für die Zeilen und Spalten der Bildränder wiederum Abweichungen von diesem Konzept vorgesehen sein. Auf Grundlage der somit kodierten Pixelwerte werden die restlichen Pixelwerte kodiert, wobei dies nicht in der erläuterten Zeilenreihenfolge geschehen muss (abwechselndes Berücksichtigen der jeweiligen drittnächsten Zeile und der jeweiligen vorhergehenden Zeile). Wesentlich ist vielmehr, dass der geschätzte Pixelwert nun in Abhängigkeit von dem jeweiligen Pixelwert von einem oder mehreren der vier unmittelbar benachbarten Pixel ermittelt werden kann, da diese ja bereits kodiert (und vorzugsweise wieder dekodiert) worden sind. Besonders vorteilhaft ist dieses Verfahren, wenn die Bilddaten Pixelwerte einer ersten, zweiten und dritten Farbe umfassen. Vorzugsweise werden zunächst die Pixelwerte der ersten Farbe (z.B. Grün) gemäß der vorbestimmten Zeilenreihenfolge in Abhängigkeit von bereits kodierten Pixelwerten der ersten Farbe kodiert. Sobald das Kodieren der Pixelwerte der ersten Farbe abgeschlossen oder hinreichend fortgeschritten ist, können die Pixelwerte der zweiten und dritten Farbe (z.B. Rot und Grün) in Abhängigkeit von bereits kodierten Pixelwerten der ersten Farbe kodiert werden.

Was die genannte Schätzregel betrifft, so kann gemäß der Schätzregel in dem Schritt (b) das Ermitteln des geschätzten Pixelwerts in Abhängigkeit von einem gemittelten Wert der Pixelwerte mehrerer vorbestimmter anderer Pixel erfolgen. Hierdurch kann auf einfache Weise eine hohe Genauigkeit der Vorhersage erreicht werden.

Allerdings können auch andere oder zusätzliche Parameter für das Vorhersagen eines geschätzten Pixelwerts berücksichtigt werden. Beispielsweise kann gemäß der Schätzregel eine Kantenstruktur berücksichtigt werden, die in der Bildinformation der Pixelwerte der berücksichtigten vorbestimmten anderen Pixel enthalten ist. Eine solche Kantenstruktur kann mittels bekannter Algorithmen identifiziert werden. Somit können Kanten, die in der Bildumgebung des betreffenden Pixels erkannt werden, im Bereich des betreffenden Pixels fortgesetzt werden, um hinsichtlich der Vorhersage eine höhere Genauigkeit zu erzielen.

Ähnlich zu der möglichen Verwendung mehrerer verschiedener Quantisierungsregeln kann für das Ermitteln des geschätzten Pixelwerts des genannten Schritts (b) wenigstens eine von mehreren verschiedenen Schätzregeln ausgewählt werden, wobei insbesondere die für den betreffenden Pixel günstigste Schätzregel ausgewählt wird. Welche Schätzregel die günstigste ist, kann sowohl beim Kodieren als auch beim Dekodieren anhand der vorhandenen Bilddaten ermittelt werden, oder die Schätzregel wird beim Kodieren ausgewählt und in die Bilddaten als zusätzliche Information (für das Dekodieren) aufgenommen.

Bei dieser Ausführungsform ist es bevorzugt, wenn für den betreffenden Pixel mehrere geschätzte Pixelwerte unter Verwendung verschiedener Schätzregeln ermittelt werden, wobei für jede Schätzregel ein Signifikanzwert erzeugt wird. Für das Kodieren wird wenigstens eine der Schätzregeln in Abhängigkeit von den erzeugten Signifikanzwerten ausgewählt. Beispielsweise kann die Schätzregel mit dem höchsten Signifikanzwert ausgewählt werden. Es ist auch möglich, aus den ermittelten mehreren geschätzten Pixelwerten (entsprechend den verschiedenen Schätzregeln) ein gewichtetes Mittel zu bilden, wobei die Gewichtung in Abhängigkeit von dem jeweiligen Signifikanzwert erfolgt. Durch die Bereitstellung verschiedener Schätzregeln können Schätzer für häufig vorkommende Strukturen gebildet werden, beispielsweise optimiert für senkrecht verlaufende Kanten, optimiert für horizontal verlaufende Kanten und optimiert für diagonal verlaufende Kanten. Durch die Verwendung mehrerer derartiger Schätzer kann die Qualität der Vorhersage gesteigert werden.

Gemäß einer weiteren Ausführungsform wird vor dem Kodieren der Pixelwerte wenigstens ein Satz von Bildbereichswerten in Abhängigkeit von den Pixelwerten erzeugt. Jeder Bildbereichswert ist einer Gruppe von Pixeln zugeordnet, d.h. mehreren Pixeln (jedoch weniger Pixeln als die Gesamtzahl der Pixel des jeweiligen Bildes). Somit bilden die Bildbereichswerte ein Bild von reduzierter Ortsauflösung (im Vergleich zu den zu komprimierenden Bilddaten, d.h. im Vergleich zu der genannten Vielzahl von Pixelwerten). In diesem Fall erfolgt das Ermitteln des geschätzten Pixelwerts des betreffenden Pixels gemäß der Schätzregel in dem Schritt (b) in Abhängigkeit auch von wenigstens einem der Bildbereichswerte. Durch die zusätzliche Berücksichtigung eines derartigen Vergleichsbilds von reduzierter Ortsauflösung kann die Qualität der Vorhersage beim Ermitteln der geschätzten Pixelwerte ebenfalls erhöht werden. Diese Ausführungsform setzt allerdings voraus, dass das Vergleichsbild von reduzierter Ortsauflösung, d.h. der Satz von Bildbereichswerten, ebenfalls komprimiert (und gespeichert) wird, damit die Bildbereichswerte für das spätere Dekodieren der Pixelwerte ebenso zur Verfügung stehen.

In einer Weiterbildung dieser Ausführungsform kann ein derartiger Satz von Bildbereichswerten einem Vergleichsbild von stark reduzierter Ortsauflösung entsprechen, wobei durch iteratives Schätzen ein jeweiliges Vergleichsbild von erhöhter Ortsauflösung (im Vergleich zu dem vorherigen Bild) erzeugt wird. Somit können für das Ermitteln eines geschätzten Pixelwerts des jeweiligen Pixels in dem Schritt (b) die folgenden Schritte vorgesehen sein:
- Ermitteln eines geschätzten Bildbereichszwischenwerts in Abhängigkeit zumindest von dem Pixelwert des vorbestimmten anderen Pixels und von dem jeweiligen Bildbereichswert unter Verwendung der Schätzregel, wobei der Bildbereichszwischenwert einer kleineren Gruppe von Pixeln zugeordnet ist als der Bildbereichswert;
- optional Wiederholen dieses Schritts, um geschätzte Bildbereichszwischenwerte zu ermitteln, die einer noch kleineren Gruppe von Pixeln zugeordnet sind als die zuvor ermittelten Bildbereichszwischenwerte; und
- Ermitteln des geschätzten Pixelwerts des betreffenden Pixels in Abhängigkeit zumindest von dem Pixelwert des vorbestimmten anderen Pixels und von dem jeweiligen Bildbereichszwischenwert unter Verwendung der Schätzregel.

Mit anderen Worten wird bei dieser Weiterbildung das ursprüngliche Vergleichsbild von reduzierter Ortsauflösung dazu verwendet, wiederum unter Berücksichtigung der Pixelumgebung einen geschätzten Bildbereichszwischenwert vorherzusagen. Die Bildbereichszwischenwerte entsprechen dann einem geschätzten Vergleichsbild von erhöhter Ortsauflösung (im Vergleich zu dem ursprünglichen Vergleichsbild von reduzierter Ortsauflösung). Diese geschätzten Bildbereichszwischenwerte werden dann zusätzlich für das Vorhersagen des geschätzten Pixelwerts des betreffenden Pixels berücksichtigt. Hierbei kann das Ermitteln der geschätzten Bildbereichszwischenwerte einmal oder mehrmals wiederholt werden, um die Ortsauflösung des Vergleichsbildes jeweils zu erhöhen. Eine besonders einfache Berechnung ergibt sich, wenn hierbei die Ortsauflösung in jedem Iterationsschritt um den Faktor 2 oder 4 erhöht wird (binär gestufte Reihe).

Gemäß einer weiteren Ausführungsform handelt es sich bei den Bilddaten um Bewegtbilddaten einer Bewegtbildkamera, die einer zeitlichen Folge von Bilddatensätzen entsprechen. In diesem Fall kann den Pixeln zusätzlich zu dem jeweiligen Pixelwert wenigstens ein jeweiliger Pixelreferenzwert zugeordnet sein, der einem Pixelwert eines vorangegangenen Bilddatensatzes der zeitlichen Folge entspricht. Mit anderen Worten bilden die Pixelreferenzwerte ein Bild, das zeitlich versetzt zu der Erzeugung des aktuell betrachteten Bildes generiert worden ist. Diese Pixelreferenzwerte können nun zusätzlich berücksichtigt werden, um in dem Schritt (b) den jeweiligen geschätzten Pixelwert vorherzusagen. Hierdurch kann die Qualität der Vorhersage ebenfalls erhöht werden, wobei ausgenutzt wird, dass in einer Sequenz von Bewegtbildern einzelne Bilder oftmals zumindest teilweise gleich sind. In diesem Fall kann ein Schätzer (entsprechend der verwendeten Schätzregel) das zuvor komprimierte bzw. dekomprimierte Bild als Zusatzinformation verwenden. Eine weitere Verbesserung der Vorhersagequalität beim Ermitteln der geschätzten Pixelwerte kann erreicht werden, wenn eine Bewegungsanalyse vorgenommen wird. Hierfür kann beispielsweise versucht werden, die globale Bewegung zwischen dem vorangegangenen Bild und dem aktuell betrachteten Bild zu schätzen und diese Information dazu zu nutzen, die entsprechend örtlich versetzte Bildinformation des vorangegangenen Bildes bei der Vorhersage der geschätzten Pixelwerte zu berücksichtigen.

Gemäß einer weiteren Ausführungsform erfolgt während des Dekodierens der Pixelwerte das Ermitteln des jeweiligen dekodierten Pixelwerts des betreffenden Pixels in dem genannten Schritt (g) in Abhängigkeit auch von einem jeweiligen vorbestimmten Rauschwert, der beispielsweise dem durch Anwendung der Differenzwert-Rücktransformationsregel ermittelten rücktransformierten Differenzwert hinzugefügt wird (als positiver und/oder negativer Wert). Dies kann vor oder nach dem Verrechnen des rücktransformierten Differenzwerts mit dem nachgebildeten geschätzten Pixelwert des betreffenden Pixels erfolgen. Durch eine derartige Hinzufügung von künstlichem Rauschen wird erreicht, dass die rücktransformierten Differenzwerte trotz der erfolgten Quantisierung kontinuierlich oder zumindest quasi-kontinuierlich verteilt sind. Damit das hinzugefügte Rauschen jedoch das Gesamtrauschen im Bild nicht erhöht, wird der jeweilige Rauschwert auch bereits während des Kodierens der Pixelwerte berücksichtigt. Hierfür erfolgt die Quantisierung während des Kodierens, also das Ermitteln des jeweiligen quantisierten Differenzwerts in dem Schritt (d), in Abhängigkeit auch von dem demselben jeweiligen vorbestimmten Rauschwert des betreffenden Pixels. Beispielsweise kann der jeweilige vorbestimmte Rauschwert in dem Schritt (d) dem Pixelwert des betreffenden Pixels hinzugefügt werden (vorzugsweise mit umgekehrtem Vorzeichen), bevor oder nachdem der geschätzte Pixelwert subtrahiert wird, um den Differenzwert des betreffenden Pixels zu bilden. Somit kann bereits beim Quantisieren die günstigere Quantisierungsstufe, d.h. der (unter Berücksichtigung des Rauschwerts) nächstliegende quantisierte Differenzwert ausgewählt werden, um eine Erhöhung des Gesamtrauschens im Bild zu vermeiden. Vorzugsweise wird die Amplitude des hinzugefügten Rauschwerts entsprechend der Differenz benachbarter Quantisierungsstufen gewählt. Insbesondere kann der Rauschwert Werte annehmen, die symmetrisch um den Wert Null verteilt sind, wobei der Abstand zwischen der positiven und der negativen Amplitude des Rauschwerts dem Abstand benachbarter quantisierter Differenzwerte entspricht.

Um bei dieser Ausführungsform die Effizienz des Komprimierens der quantisierten Differenzwerte zu verbessern, kann der jeweilige vorbestimmte Rauschwert während des Kodierens der Pixelwerte auch dazu verwendet werden, die quantisierten Differenzwerte wahlweise zu invertieren. Hierzu kann geprüft werden, ob der vorbestimmte Rauschwert ein positives oder ein negatives Vorzeichen besitzt, wobei lediglich in einem dieser beiden Fälle der quantisierte Differenzwert des betreffenden Pixels invertiert wird, bevor der quantisierte Differenzwert komprimiert wird. Mit anderen Worten wird in Abhängigkeit von dem Vorzeichen des jeweiligen vorbestimmten Rauschwerts das Vorzeichen des quantisierten Differenzwerts des betreffenden Pixels, vorzugsweise in dem Schritt (d), vor dem Komprimieren geändert (von positiv auf negativ oder von negativ auf positiv). Diese Vorzeichenänderung wird bei dem späteren Dekodieren, vorzugsweise vor oder in dem Schritt (g), wieder rückgängig gemacht (auch bei dem Dekodieren ist das Vorzeichen des jeweiligen Rauschwerts ja bekannt). Durch ein derartiges temporäres Ändern des Vorzeichens der quantisierten Differenzwerte wird jedoch einer Verschlechterung des Komprimierens entgegengewirkt, die aus einer Verbreiterung der Verteilung der quantisierten Differenzwerte aufgrund des Hinzufügens der künstlichen Rauschwerte resultieren kann.

Alternativ oder zusätzlich ist eine Berücksichtigung von künstlichen Rauschwerten auch in dem Fall möglich, dass beim Kodieren der Pixelwerte vor dem Bilden des Differenzwerts des betreffenden Pixels der jeweilige Pixelwert in dem Schritt (a) quantisiert wird (gemäß der Helligkeitswert-Quantisierungsregel, wie vorstehend erläutert). In diesem Fall kann in entsprechender Weise das Quantisieren des Pixelwerts des betreffenden Pixels ebenfalls in Abhängigkeit von einem jeweiligen vorbestimmten Rauschwert des betreffenden Pixels erfolgen, wobei während des Dekodierens der Pixelwerte das Ermitteln des dekodierten Pixelwerts des betreffenden Pixels in dem Schritt (g) in Abhängigkeit auch von diesem vorbestimmten Rauschwert des betreffenden Pixels erfolgt. Insbesondere kann beim Dekodieren der jeweilige Rauschwert dem ermittelten dekodierten Pixelwert hinzugefügt werden (als positiver und/oder negativer Wert), während der vorbestimmte Rauschwert dem jeweiligen Pixelwert vor dem Quantisieren des Pixelwerts mit umgekehrtem Vorzeichen hinzugefügt wird. Auch hierdurch wird erreicht, dass die dekodierten Pixelwerte trotz der erfolgten Quantisierung kontinuierlich oder zumindest quasi-kontinuierlich verteilt sind. Natürlich entsprechen die bei dieser Ausführungsform verwendeten Rauschwerte nicht unbedingt den Rauschwerten, die bei dem vorstehend erläuterten Quantisieren der Differenzwerte verwendet werden.

Das künstlich hinzugefügte Rauschen kann bei der letztgenannten Ausführungsform die Effizienz des dem Kodieren folgenden Komprimierens der Indexdifferenzwerte beeinträchtigen, da die Differenz zwischen der Vorhersage des Schätzers (geschätzter Pixelwert) und dem tatsächlichen Pixelwert durch das Rauschen vergrößert wird. Dies ist darauf zurückzuführen, dass bei der Quantisierung der Pixelwerte während des Kodierens - wie erläutert - ein Indexwert ausgewählt wird, der nicht unbedingt (d.h. gemäß der Helligkeitswert-Quantisierungsregel) dem betreffenden Pixelwert entspricht (sondern lediglich unter Berücksichtigung des vorbestimmten Rauschwerts). Dieser modifizierte Indexwert wird jedoch der Bildung des Indexdifferenzwerts in dem Schritt (d) zugrunde gelegt. Da jedoch der Wert des hinzugefügten Rauschens bekannt ist und dieses Rauschen in Zusammenhang mit den ermittelten Indexwerten steht, kann mit Hilfe eines zweiten Schätzers wiederum der Einfluss des hinzugefügten Rauschens auf die gebildeten Indexdifferenzwerte vorhergesagt werden. Hierfür wird ein Schätzer verwendet, der als Eingangswerte die gemäß Schritt (d) beim Kodieren gebildeten Indexdifferenzwerte sowie den jeweiligen Wert des hinzugefügten Rauschens erhält. Hieraus liefert der Schätzer einen so genannten Rauschkompensationswert, der einer Vorhersage über den Einfluss des hinzugefügten Rauschens auf den jeweiligen Indexdifferenzwert entspricht. Dieser Rauschkompensationswert wird von dem jeweiligen Indexdifferenzwert subtrahiert, wodurch die Indexdifferenzwerte insgesamt kleiner werden und die Effizienz des nachfolgenden Komprimierens der Indexdifferenzwerte verbessert wird.

Bei den beiden vorgenannten Ausführungsformen mit Berücksichtigung von künstlichen Rauschwerten für die Differenzwert-Quantisierung oder die Helligkeitswert-Quantisierung müssen die jeweiligen Rauschwerte der verschiedenen Pixel variiert werden. Hierfür kann eine Sequenz von vorbestimmten Rauschwerten verwendet werden. Damit beim Kodieren der Pixelwerte dieselbe Sequenz von vorbestimmten Rauschwerten verwendet werden kann wie beim Dekodieren, ist es bevorzugt, wenn die Rauschwerte einer Sequenz von Zufallszahlen entsprechen, die mittels eines Pseudo-Zufallsgenerators erzeugt wird, wobei dieser Pseudo-Zufallsgenerator sowohl beim Kodieren als auch beim Dekodieren zur Verfügung steht. Der Pseudo-Zufallsgenerator kann hierbei mit einem festen Startwert arbeiten, so dass sowohl beim Kodieren als auch beim Dekodieren dieser Startwert von vornherein bekannt ist. Vorzugsweise wird jedoch beim Kodieren ein zufälliger Startwert generiert, und dieser Startwert wird zusätzlich im komprimierten Bild (d.h. mit den Bilddaten) gespeichert. Somit wird bei jedem Bild eine mit einem anderen Startwert beginnende Sequenz von Zufallszahlen verwendet, wodurch sich das Rauschen an einem jeweiligen Pixel bei einer Folge von aufeinander folgenden Bildern ausgleicht.

Was die Verteilung der künstlichen Rauschwerte bei den vorgenannten Ausführungsformen betrifft, so ist es vorteilhaft, wenn die relative Häufigkeit der Rauschwerte einer dreieckförmigen Verteilungsfunktion entspricht, die ihr Maximum bei dem Wert Null hat. Eine derartige Verteilungsfunktion lässt sich auf einfache Weise dadurch erreichen, dass zwei unabhängige Zufallszahlen berechnet werden, die in einem Intervall von Null bis zu einem Wert MAX liegen, wobei diese zwei Zufallszahlen dann voneinander subtrahiert werden. Die Differenz der zwei Zufallszahlen liegt dann im Intervall -MAX bis +MAX und hat die gewünschte dreieckförmige Verteilung. Der Parameter MAX wird vorteilhaft so gewählt, dass er gerade die Größe eines Quantisierungsschritts hat (z.B. Abstand benachbarter quantisierter Differenzwerte).

Bei dem erfindungsgemäßen Verfahren werden die Pixelwerte gemäß einer bestimmten Reihenfolge der Pixel kodiert und dekodiert. Die Anordnung des bei dem Schätzschritt (e) berücksichtigten anderen Pixels (oder der mehreren anderen Pixel) ist vorzugsweise derart gewählt, dass für diesen anderen Pixel (oder für diese mehreren anderen Pixel) der Pixelwert gemäß der genannten bestimmten Reihenfolge bereits dekodiert worden ist, wenn der nachgebildete geschätzte Pixelwert des betreffenden Pixels ermittelt wird. Mit anderen Worten ist durch die bestimmte Reihenfolge sichergestellt, dass das Dekodieren der Pixel auf Bildpartien basieren kann, zu denen die Pixelwerte bereits dekodiert worden sind.

Damit gemäß der genannten bestimmten Reihenfolge dekodiert werden kann, ist es erforderlich, für einen gewissen Bildbereich mit Ersatzwerten zu arbeiten. Ein Teil der Pixelwerte wird deshalb nicht oder nicht vollständig kodiert, und diese Pixelwerte dienen beim Ermitteln des nachgebildeten geschätzten Pixelwerts in dem Schätzschritt (e) als jeweiliger Ersatzwert für den genannten zuvor dekodierten Pixelwert. Dieses Zurückgreifen auf Ersatzwerte kann insbesondere für eine oder mehrere Startzeilen und/oder eine oder mehrere Randspalten des Bildes vorgesehen sein.

Gemäß einer weiteren Ausführungsform werden die Pixelwerte mehrerer verschiedener Pixel gleichzeitig kodiert. Sofern das Kodieren für mehrere Pixelwerte eines Bildes oder sogar einer Bildzeile mittels mehrerer Bearbeitungseinheiten parallel erfolgt, kann die Kompression der Bilddaten besonders schnell erfolgen. Die einzelnen Bearbeitungseinheiten können hierbei sogar mit einer relativ geringen Geschwindigkeit arbeiten, wodurch sich insgesamt eine vergleichsweise geringe Verlustleistung ergibt, die bei elektronischen Schaltkreisen überproportional mit der Taktfrequenz ansteigt. Eine derartige Kodierung mehrerer Pixelwerte gleichzeitig ist besonders einfach möglich, wenn die verwendeten Schätzer so gestaltet sind, dass nur Pixel berücksichtigt werden, die von der betreffenden Bearbeitungseinheit bereits zuvor bearbeitet worden sind.

Gemäß einer weiteren Ausführungsform bilden die Bilddaten ein so genanntes RGB-Bild und umfassen Pixelwerte einer ersten Farbe (z.B. Grün), Pixelwerte einer zweiten Farbe (z.B. Rot), und Pixelwerte einer dritten Farbe (z.B. Blau). Vorzugsweise werden die Pixelwerte der zweiten Farbe in Abhängigkeit von den Pixelwerten der ersten Farbe modifiziert, bevor die Pixelwerte der zweiten Farbe kodiert werden. In entsprechender Weise werden die Pixelwerte der dritten Farbe vorzugsweise in Abhängigkeit von den Pixelwerten der ersten Farbe modifiziert, bevor die Pixelwerte der dritten Farbe kodiert werden. Hierdurch kann die Korrelation zwischen verschiedenen Farbkanälen ausgenutzt werden. Der Schätzer - d.h. die Bearbeitungseinheit, die gemäß dem Schätzschritt (b) einen geschätzten Pixelwert vorhersagt - arbeitet dann auf Grundlage der Ergebnisse der Verrechnung des zweiten bzw. dritten Kanals mit dem ersten Kanal, wobei wie bei dem ersten Kanal gemäß dem Schritt (d) ein Differenzwert gebildet wird, der quantisiert und nachfolgend komprimiert wird. Das genannte Modifizieren der Pixelwerte kann beispielsweise die Bildung einer Differenz oder eines Quotienten sein.

Sofern es sich bei den Bilddaten um Rohdaten einer elektronischen Kamera handelt (so genanntes RAW-Bild), ist an jedem Bildort nur eine einzige Farbinformation vorhanden. Auch in diesem Fall ist es von Vorteil, mit einem ersten Farbkanal zu beginnen und die entsprechenden Pixelwerte zu komprimieren (insbesondere Grün-Kanal). Die Pixelwerte des betreffenden Farbkanals werden jedoch auch dazu verwendet, um an den Bildstellen, an denen nur Informationen über die anderen Farbkanäle vorliegen, eine Schätzung des jeweiligen Helligkeitswerts der betreffenden Farbe zu gewinnen (Interpolation der Pixelwerte der benachbarten Pixel derselben Farbe). Danach können - wie erläutert - der zweite Farbkanal und der dritte Farbkanal mit dem ersten Farbkanal verrechnet werden, beispielsweise durch Bildung einer Differenz oder eines Quotienten.

Die Erfindung bezieht sich auch generell auf ein Verfahren zur Kodierung und Dekodierung von Bilddaten, die mehrere Pixel umfassen, wobei jeder Pixel eine Vielzahl von Pixelwerten annehmen kann, wobei zum Kodieren des Pixelwerts eines jeweiligen Pixels ein jeweiliger Schätzwert in Abhängigkeit von dem Pixelwert zumindest eines vorbestimmten anderen Pixels unter Verwendung einer Schätzregel ermittelt wird, wobei in Abhängigkeit von dem Schätzwert und dem tatsächlichen Pixelwert ein Differenzwert des betreffenden Pixels gebildet wird, und wobei zum Dekodieren des Pixelwerts des betreffenden Pixels ein jeweiliger nachgebildeter Schätzwert in Abhängigkeit zumindest von einem zuvor dekodierten Pixelwert des vorbestimmten anderen Pixels unter Verwendung der Schätzregel ermittelt wird, wobei der nachgebildete Schätzwert mit dem Differenzwert des betreffenden Pixels verrechnet wird, um einen dekodierten Pixelwert des betreffenden Pixels zu ermitteln. Wie vorstehend erläutert, kann durch ein derartiges Verfahren die (nach dem Kodieren) zu komprimierende Datenmenge erheblich reduziert werden, während trotz geringen Rechenaufwands eine gute Bildqualität erreicht wird.

Bei einem derartigen Verfahren können die Pixel in einer Anordnung von mehreren Zeilen vorgesehen sein, wobei die Pixelwerte derart gemäß einer Zeilenreihenfolge kodiert werden, dass abwechselnd Pixelwerte der jeweiligen drittnächsten Zeile und Pixelwerte der jeweiligen vorhergehenden Zeile kodiert werden, wobei für das Kodieren von Pixelwerten der genannten jeweiligen drittnächsten Zeile das Ermitteln des Schätzwerts des betreffenden Pixels in Abhängigkeit von dem Pixelwert zumindest eines vorbestimmten anderen Pixels erfolgt, der in der hierzu vorvorhergehenden Zeile angeordnet ist, und wobei für das Kodieren von Pixelwerten der genannten jeweiligen vorhergehenden Zeile das Ermitteln des Schätzwerts des betreffenden Pixels in Abhängigkeit von dem jeweiligen Pixelwert mehrerer vorbestimmter anderer Pixel erfolgt, die in der hierzu vorhergehenden Zeile und in der hierzu nächsten Zeile angeordnet sind, wie vorstehend erläutert. Vorzugsweise wird innerhalb der jeweiligen Zeile lediglich für jeden zweiten Pixel der Schätzwert ermittelt, wobei für die restlichen Pixel unabhängig von der genannten Zeilenreihenfolge der Schätzwert in Abhängigkeit von dem jeweiligen Pixelwert von vier unmittelbar benachbarten Pixeln ermittelt wird, die bereits kodiert (und vorzugsweise dekodiert) worden sind.

Bei einem derartigen Verfahren kann alternativ oder zusätzlich vor dem Kodieren der Pixelwerte wenigstens ein Satz von Bildbereichswerten in Abhängigkeit von den Pixelwerten erzeugt werden, wobei jeder Bildbereichswert einer Gruppe von Pixeln zugeordnet ist, so dass die Bildbereichswerte einem Bild von reduzierter Ortsauflösung entsprechen, wobei das Ermitteln des Schätzwerts des betreffenden Pixels gemäß der wenigstens einen Schätzregel in Abhängigkeit auch von wenigstens einem der Bildbereichswerte erfolgt. Insbesondere kann hierbei - wie vorstehend erläutert - das Ermitteln des Schätzwerts des betreffenden Pixels die folgenden Schritte umfassen:
- Ermitteln eines geschätzten Bildbereichszwischenwerts in Abhängigkeit zumindest von dem Pixelwert des vorbestimmten anderen Pixels und von dem jeweiligen Bildbereichswert unter Verwendung der wenigstens einen Schätzregel, wobei der Bildbereichszwischenwert einer kleineren Gruppe von Pixeln zugeordnet ist als der Bildbereichswert; und
- Ermitteln des Schätzwerts des betreffenden Pixels in Abhängigkeit zumindest von dem Pixelwert des vorbestimmten anderen Pixels und von dem jeweiligen Bildbereichszwischenwert unter Verwendung der wenigstens einen Schätzregel.

Die Erfindung bezieht sich ferner generell auf ein Verfahren zur verlustbehafteten Kompression von Bilddaten, die mehrere Pixel umfassen, wobei jeder Pixel eine Vielzahl von Pixelwerten annehmen kann, wobei zumindest für einige der Pixel eine Quantisierung der Pixelwerte durchgeführt wird (also ein Ermitteln von Indexwerten), wobei größere Pixelwerte gröber quantisiert werden als relativ kleinere Pixelwerte, und wobei die quantisierten Pixelwerte gemäß einer Komprimierregel komprimiert werden. Wie vorstehend erläutert, wird hierdurch eine Rauschoptimierung der Quantisierung erzielt, insbesondere für Bilddaten, die von einer elektronischen Kamera erzeugt worden sind. In diesem Fall kann es sich bei den zu quantisierenden Pixelwerten um Helligkeitswerte oder auch um Differenzwerte der vorstehend erläuterten Art (Relation zwischen Pixelwert und geschätztem Pixelwert) handeln.

Die Erfindung bezieht sich ferner generell auf ein Verfahren zur Kompression von Bilddaten, die mittels eines elektronischen Bildsensors erzeugt worden sind und die mehrere Pixel umfassen, wobei jeder Pixel eine Vielzahl von Pixelwerten annehmen kann (z.B. jeweiliger Helligkeitswert, oder Differenzwert infolge eines Vergleichs mit einem geschätzten Wert, oder modifizierter Helligkeitswert oder Differenzwert). Bei diesem Verfahren wird zumindest für einige der Pixel unter Verwendung wenigstens einer Quantisierungsregel (z.B. Helligkeitswert-Quantisierungsregel oder Differenzwert-Quantisierungsregel) eine Quantisierung der Pixelwerte durchgeführt, wobei die quantisierten Pixelwerte gemäß einer Komprimierregel komprimiert werden, und wobei ein Quantisierungsfehler für den jeweiligen Pixel ermittelt wird, wobei der Quantisierungsfehler für das spätere Quantisieren des Pixelwerts zumindest eines anderen Pixels berücksichtigt wird, wie dies vorstehend erläutert wurde.

Bei diesem Verfahren kann der Quantisierungsfehler dadurch ermittelt werden, dass der quantisierte Pixelwert des betreffenden Pixels unter Verwendung einer Rücktransformationsregel (z.B. Helligkeitswert-Rücktransformationsregel oder Differenzwert-Rücktransformationsregel), die einer Umkehrung der genannten Quantisierungsregel entspricht, rücktransformiert wird, und dass die jeweilige Differenz zwischen dem rücktransformierten Pixelwert und dem ursprünglichen Pixelwert gebildet wird. Der für den betreffenden Pixel ermittelte Quantisierungsfehler kann dazu verwendet werden, das spätere Quantisieren des Pixelwerts zumindest eines anderen Pixels derart zu beeinflussen, dass für die Vielzahl von Pixelwerten eine Summe der Quantisierungsfehler nicht anwächst oder einen vorbestimmten Grenzwert nicht übersteigt. Beispielsweise wird der für den betreffenden Pixel ermittelte Quantisierungsfehler für das spätere Quantisieren des Pixelwerts zumindest eines anderen Pixels derart berücksichtigt, dass der Quantisierungsfehler teilweise oder vollständig auf den Pixelwert des jeweiligen anderen Pixels aufaddiert oder von dem Pixelwert subtrahiert wird, bevor oder während die genannte Quantisierungsregel auf diesen Pixelwert angewendet wird. Alternativ hierzu kann der für den betreffenden Pixel ermittelte Quantisierungsfehler für das spätere Quantisieren des Pixelwerts zumindest eines anderen Pixels derart berücksichtigt werden, dass für den quantisierten Pixelwert des jeweiligen anderen Pixels eine Quantisierungskorrektur durchgeführt wird, nachdem die genannte Quantisierungsregel auf diesen jeweiligen anderen Pixelwert angewendet worden ist.

Alternativ oder zusätzlich können bei diesem Verfahren die Pixel in einer Anordnung von mehreren Zeilen und Spalten vorgesehen sein, wobei die Spalten mehreren Spaltengruppen zugeordnet sind, von denen jede mehrere Spalten umfasst, wobei die Pixelwerte innerhalb einer jeden Spaltengruppe zeilenweise kodiert werden und die Pixelwerte der verschiedenen Spaltengruppen parallel kodiert werden, wobei nach Erreichen eines jeweiligen Zeilenendes in einer der mehreren Spaltengruppen ein in dieser Spaltengruppe ermittelter Quantisierungsfehler für das Kodieren der betreffenden Zeile oder einer nachfolgenden Zeile in wenigstens einer benachbarten Spaltengruppe verwendet wird, wie dies vorstehend erläutert wurde.

Die Erfindung bezieht sich ferner generell auf ein Verfahren zur Kodierung und Dekodierung von Bilddaten, die mehrere Pixel umfassen, wobei jeder Pixel eine Vielzahl von Pixelwerten annehmen kann, wobei während des Kodierens zumindest für einige der Pixel eine Quantisierung der Pixelwerte durchgeführt wird, wobei die Quantisierung in Abhängigkeit von einem vorbestimmten Rauschwert des jeweiligen Pixels erfolgt, und wobei während des Dekodierens auch das Ermitteln eines rücktransformierten Pixelwerts des betreffenden Pixels in Abhängigkeit von dem vorbestimmten Rauschwert des betreffenden Pixels erfolgt. Wie vorstehend erläutert, wird hierdurch trotz der Quantisierung der Pixelwerte eine kontinuierliche Verteilung der rücktransformierten Pixelwerte erreicht. Auch in diesem Fall kann es sich bei den zu quantisierenden Pixelwerten um Helligkeitswerte oder um die Differenzwerte der vorstehend erläuterten Art (Relation zwischen Pixelwert und geschätztem Pixelwert) handeln.

Bei diesem Verfahren kann während des Kodierens der vorbestimmte Rauschwert dem Pixelwert hinzugefügt werden, um hierdurch bei der Quantisierung des jeweiligen Pixelwerts eine nächstliegende Quantisierungsstufe auswählen zu können, wobei während des Dekodierens der vorbestimmte Rauschwert dem rücktransformierten Pixelwert des betreffenden Pixels mit umgekehrtem Vorzeichen hinzugefügt wird, wie vorstehend erläutert wurde. Alternativ oder zusätzlich kann während des Kodierens vor einem nachfolgenden Komprimieren der quantisierten Pixelwerte das Vorzeichen des jeweiligen quantisierten Pixelwerts in Abhängigkeit von dem Vorzeichen des vorbestimmten Rauschwerts geändert werden, wobei nach einem Dekomprimieren der quantisierten Pixelwerte während des Dekodierens das Vorzeichen des jeweiligen dekomprimierten quantisierten Pixelwerts erneut in Abhängigkeit von dem Vorzeichen des vorbestimmten Rauschwerts geändert wird, d.h. die Vorzeichenänderung wird vor dem Rücktransformieren des jeweiligen Pixelwerts rückgängig gemacht, wie vorstehend erläutert wurde. Der vorbestimmte Rauschwert wird vorzugsweise mittels eines Pseudo-Zufallsgenerators erzeugt.

Die Erfindung wird nachfolgend lediglich beispielhaft unter Bezugnahme auf die Zeichnungen erläutert.
- Fig. 1: zeigt eine schematische Darstellung eines Kompressionsverfahrens.
- Fig. 2: zeigt eine schematische Darstellung eines Dekompressionsverfahrens.
- Fig. 3: zeigt eine Quantisierungsvorschrift für Pixelwerte.
- Fig. 4: zeigt das Rauschen in Abhängigkeit von der Helligkeit.
- Fig. 5: zeigt eine Häufigkeitsverteilung von Differenzwerten.
- Fig. 6: zeigt eine Quantisierungsvorschrift für Differenzwerte.
- Fig. 7a und 7b: zeigen Häufigkeitsverteilungen von quantisierten Indexdifferenzwerten.
- Fig. 8: zeigt eine Detailansicht einer Quantisierungsvorschrift.
- Fig. 9: zeigt eine mögliche Berücksichtigung eines ermittelten Quantisierungsfehlers.
- Fig. 10: zeigt eine mögliche Berücksichtigung eines ermittelten Quantisierungsfehlers bei einer Unterteilung der Pixel in Spaltengruppen.
- Fig. 11: zeigt ein Ablaufschema für das Kodieren mehrerer Zeilen von Pixeln.
- Fig. 12: zeigt ein weiteres Ablaufschema für das Kodieren mehrerer Zeilen von Pixeln.
- Fig. 13: zeigt eine schematische Darstellung unterschiedlicher Kompressionsverfahren für verschiedene Farbkanäle eines RGB-Bildes.
- Fig. 14: zeigt eine schematische Darstellung unterschiedlicher Kompressionsverfahren für verschiedene Farbkanäle eines RAW-Bildes.

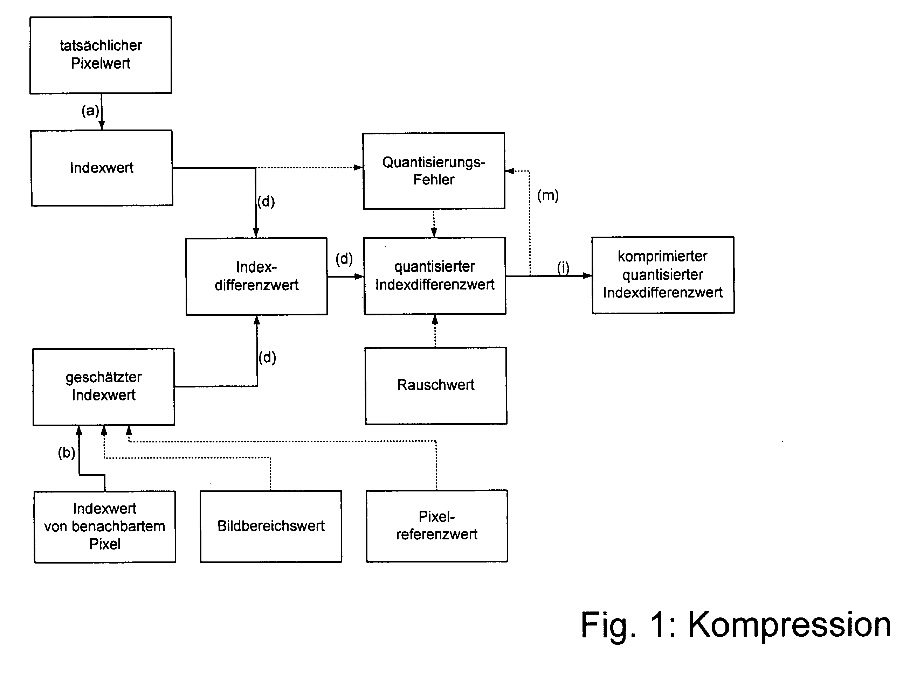

In Fig. 1 sind verschiedene Schritte eines Verfahrens zur Kompression von Bilddaten gezeigt, die eine Vielzahl von Pixelwerten umfassen. In einem optionalen Schritt (a) wird anhand der tatsächlichen Pixelwerte der verschiedenen Pixel ein jeweiliger so genannter Indexwert ermittelt. Dies geschieht mittels einer vorbestimmten Helligkeitswert-Quantisierungsregel und entspricht einer Quantisierung des jeweiligen tatsächlichen Pixelwerts.

In einem Schritt (b) wird in Abhängigkeit von dem Pixelwert eines vorbestimmten anderen Pixels ein geschätzter Pixelwert für den Pixel gemäß Schritt (a) ermittelt. Dies entspricht einer Vorhersage eines Pixelwerts unter Berücksichtigung der Pixelumgebung, wobei diese Vorhersage unter Verwendung einer vorbestimmten Schätzregel durchgeführt wird. Sofern gemäß Schritt (a) mit quantisierten Pixelwerten (d.h. Indexwerten) gearbeitet wird, handelt es sich bei dem geschätzten Pixelwert gemäß Schritt (b) ebenfalls um einen quantisierten Wert (d.h. um einen geschätzten Indexwert), wobei dieselbe Helligkeitswert-Quantisierungsregel verwendet wird wie in dem Schritt (a).. In diesem Fall beruht die Vorhersage ebenfalls auf dem quantisierten Pixelwert (d.h. Indexwert) des genannten anderen Pixels.

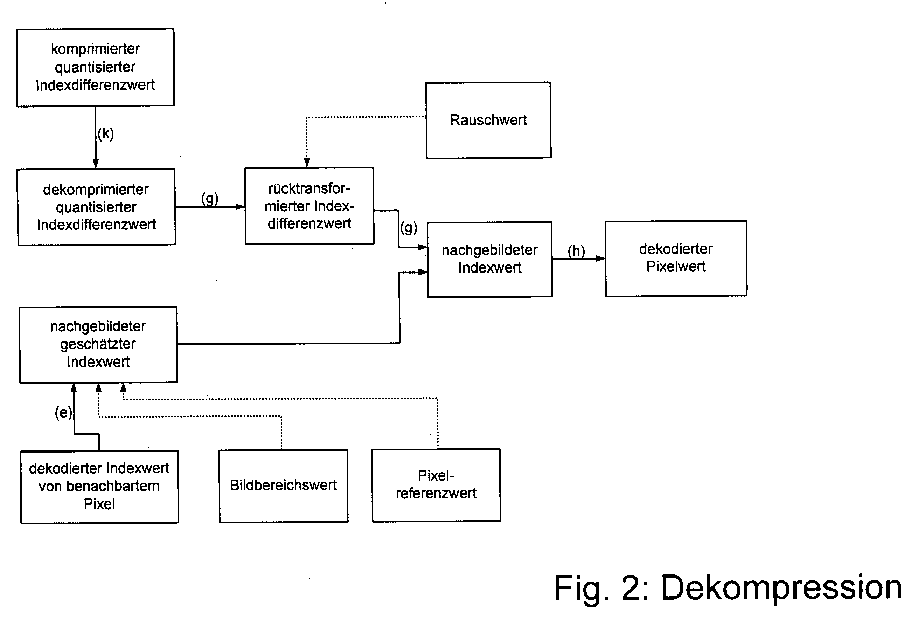

Der Schritt (b) wird generell für diejenigen Pixel durchgeführt, für die der Pixelwert des jeweiligen vorbestimmten anderen Pixels bereits kodiert worden ist oder ein geeigneter Ersatzwert vorliegt. Bei dem genannten Pixelwert des vorbestimmten anderen Pixels für das Schätzen gemäß Schritt (b) handelt es sich vorzugsweise um einen Wert, der aus einem zuvor bereits erfolgten Kodieren und Dekodieren ermittelt worden ist. Mit anderen Worten soll beim Kodieren der Pixelwerte das Schätzen des betreffenden Pixelwerts in Abhängigkeit von Pixelwerten erfolgen, die zuvor bereits kodiert und wieder dekodiert worden sind. Dies entspricht nämlich auch den Verhältnissen, die bei dem Schätzen während des nachfolgenden Dekodierens vorliegen (Schritt (e) in Fig. 2).

Zwischen dem Indexwert gemäß Schritt (a) und dem geschätzten Indexwert gemäß Schritt (b) wird in einem Schritt (d) die Differenz gebildet, um einen so genannten Indexdifferenzwert zu ermitteln (Differenzwert der quantisierten Pixelwerte). Ferner wird auch der jeweilige Indexdifferenzwert gemäß einer vorbestimmten Differenzwert-Quantisierungsregel quantisiert, um einen quantisierten Indexdifferenzwert zu bilden. Diese weitere Quantisierung kann beispielsweise durch Verwendung einer geeigneten Nachschlagetabelle gemeinsam mit dem Bilden des Indexdifferenzwerts erfolgen.

Die somit ermittelten quantisierten Indexdifferenzwerte werden in einem Schritt (i) gemäß einem bekannten Verfahren komprimiert, vorzugsweise verlustfrei, um einen jeweiligen komprimierten quantisierten Indexdifferenzwert zu erhalten. Die komprimierten quantisierten Indexdifferenzwerte können dann gespeichert werden.

Aufgrund der Erstellung einer Vorhersage von geschätzten Pixelwerten unter Berücksichtigung der jeweiligen Pixelumgebung gemäß Schritt (b), und aufgrund der Bildung eines Differenzwerts gemäß Schritt (d) wird im Rahmen der Kodierung gemäß den Schritten (a), (b) und (d) bereits eine erhebliche Reduzierung der Datenmenge erreicht, die nachfolgend in dem Schritt (i) komprimiert werden muss. Eine signifikante zusätzliche Reduzierung der Datenmenge wird dadurch erreicht, dass in dem Schritt (d) die Indexdifferenzwerte quantisiert werden.

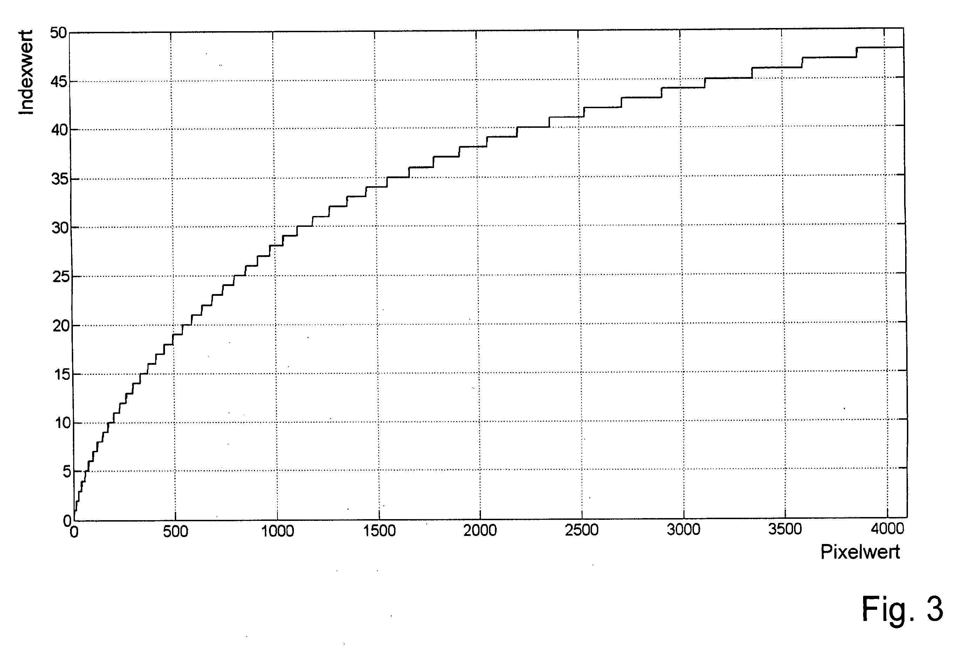

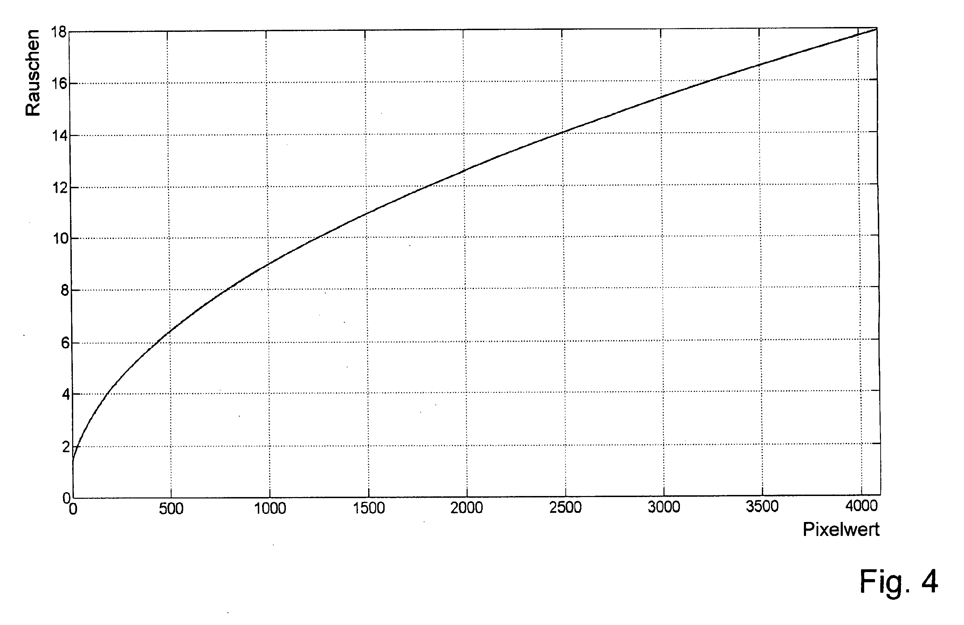

Eine mögliche Quantisierungsvorschrift, die der Helligkeitswert-Quantisierungsregel gemäß dem Schritt (a) entspricht, ist in Fig. 3 illustriert. Dargestellt sind die Indexwerte (entsprechend den Quantisierungsstufen) in Abhängigkeit von den Pixelwerten (entsprechend der Helligkeit). Die Helligkeitswert-Quantisierungsregel entspricht hier einer Wurzel-Stufenfunktion, die die Abhängigkeit des Rauschens von der Helligkeit in den Bilddaten eines elektronischen Bildsensors nachbildet. Diese Abhängigkeit ist in Fig. 4 dargestellt. Indem die verwendete Helligkeitswert-Quantisierungsregel derart gewählt ist, dass größere Pixelwerte (in Fig. 3 rechts) gröber quantisiert werden als relativ kleinere Pixelwerte (in Fig. 3 links), ist die Quantisierung der Pixelwerte dem im Bild enthaltenen Rauschen nachempfunden, so dass die Quantisierung in dem dekodierten Bild weniger leicht wahrgenommen wird.

Es ist allerdings anzumerken, dass ein Quantisieren der Pixelwerte gemäß den Schritten (a) und (b) nicht zwingend erforderlich ist oder bereits vor der erläuterten Kodierung durchgeführt werden kann. In diesem Fall wird in dem genannten Schritt (d) ein Differenzwert in Abhängigkeit von den vorhandenen Pixelwerten (tatsächlicher Pixelwert und geschätzter Pixelwert) gebildet und quantisiert.

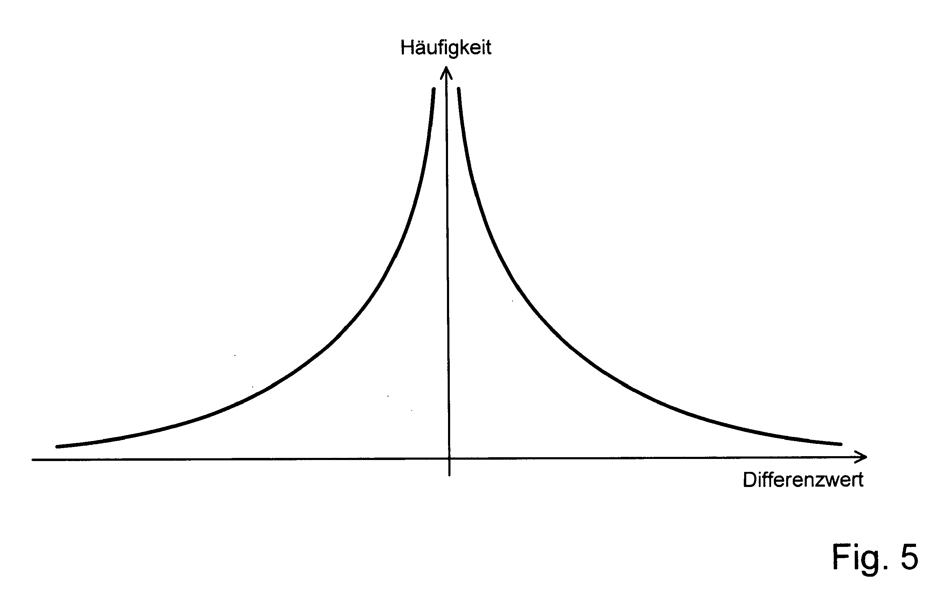

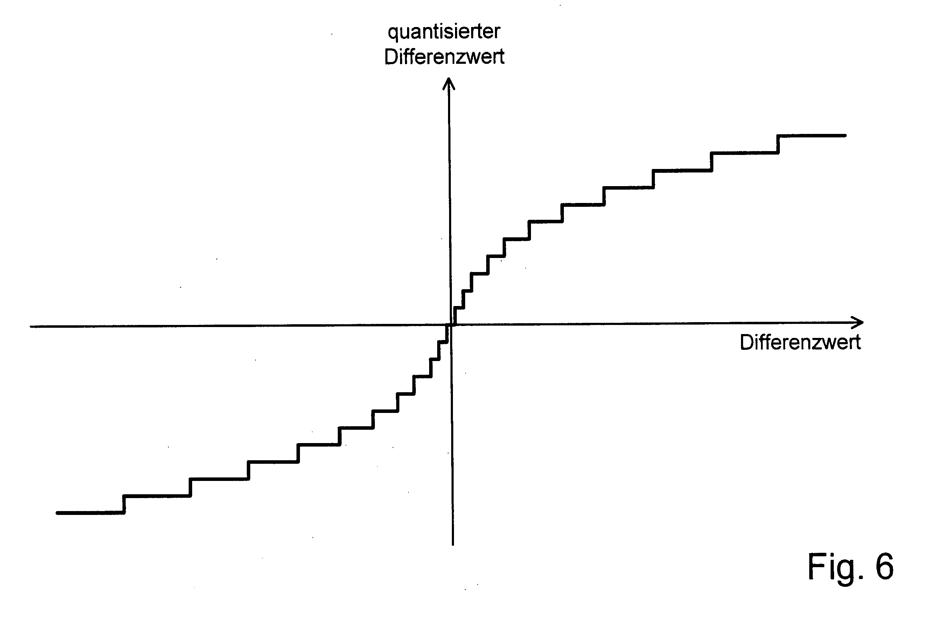

Der besondere Vorteil des Quantisierens der Indexdifferenzwerte (oder lediglich der vorstehend genannten Differenzwerte) wird nachfolgend anhand von Fig. 5 und 6 erläutert. Fig. 5 zeigt eine typische Häufigkeitsverteilung der gebildeten Differenzwerte. Diese Häufigkeitsverteilung verhält sich ähnlich einer 1/x-Funktion (für negative Werte invertiert). Betragsmäßig große Differenzwerte besitzen also eine deutlich geringere Häufigkeit als betragsmäßig relativ kleinere Differenzwerte. Dieser Umstand wird für eine Differenzwert-Quantisierungsregel ausgenutzt, wie sie als Stufenfunktion in Fig. 6 illustriert ist. Gemäß der verwendeten Differenzwert-Quantisierungsregel werden Differenzwerte mit größeren Absolutbeträgen gröber quantisiert als Differenzwerte mit relativ kleineren Absolutbeträgen. Hierdurch erfolgt ein Informationsverlust lediglich in solchen Bildbereichen, in denen ohnehin nur ein geringer Anteil der gesamten Bildinformation vorhanden ist und in denen die Bildinformation ohnehin nur schwer vorhersagbar ist. Somit ist die Quantisierung der Differenzwerte gemäß dem Schritt (d) letztlich nicht oder kaum wahrnehmbar, und es wird dennoch eine signifikante Reduzierung der Datenmenge erreicht. Alternativ zu einer derartigen nicht-linearen Quantisierung kann die Differenzwert-Quantisierungsregel jedoch auch einer linearen Stufenfunktion entsprechen.

In Fig. 2 ist ein Flussdiagramm eines der Kompression gemäß Fig. 1 entsprechenden Dekompressionsverfahrens gezeigt, wobei die im Rahmen der Kompression durchgeführten Schritte im Wesentlichen nachgebildet oder invertiert werden.

Entsprechend dem Schätzschritt (b) gemäß Fig. 1 wird in einem Schritt (e) in Abhängigkeit von einem zuvor bereits dekodierten Pixelwert eines anderen Pixels (mit derselben räumlichen Zuordnung wie bei dem Schritt (b)) ein nachgebildeter geschätzter Pixelwert ermittelt. Sofern beim Kodieren gemäß Schritt (a) in Fig. 1 mit quantisierten Pixelwerten (d.h. Indexwerten) gearbeitet wird, handelt es sich bei dem nachgebildeten geschätzten Pixelwert gemäß Schritt (e) wiederum um einen quantisierten Wert (d.h. um einen nachgebildeten geschätzten Indexwert).

Ferner wird in einem Schritt (k) der durch die Kompression gemäß Fig. 1 erhaltene komprimierte quantisierte Indexdifferenzwert dekomprimiert.

Der somit erhaltene dekomprimierte quantisierte Indexdifferenzwert wird in einem Schritt (g) zunächst gemäß einer Differenzwert-Rücktransformationsregel, die einer Umkehrung der bei der Kodierung gemäß Fig. 1 verwendeten Differenzwert-Quantisierungsregel entspricht, rücktransformiert.

Der jeweilige rücktransformierte Indexdifferenzwert wird sodann mit dem nachgebildeten geschätzten Indexwert gemäß Schritt (e) verrechnet (beispielsweise durch Addition), um einen nachgebildeten Indexwert zu erhalten, der dem durch Schritt (a) gemäß Fig. 1 erhaltenen Indexwert entspricht.

Für diesen nachgebildeten Indexwert erfolgt in einem Schritt (h) unter Verwendung einer Helligkeitswert-Rücktransformationsregel, die einer Umkehrung der zuvor verwendeten Helligkeitswert-Quantisierungsregel entspricht, eine Rücktransformation. Als Ergebnis liegt ein dekodierter Pixelwert für den betreffenden Pixel vor.

Sofern in Fig. 1 der Quantisierungsschritt (a) wie erläutert weggelassen werden, entfällt in Fig. 2 auch das Rücktransformieren gemäß Schritt (h), d.h. der nachgebildete Wert gemäß Schritt (g) ist bereits der dekodierte Pixelwert.

In den Fig. 1 und 2 sind auch vorteilhafte Weiterbildungen des erläuterten Kompressionsverfahrens und Dekompressionsverfahrens gezeigt. Beispielsweise kann der Vorhersage des jeweiligen geschätzten Pixelwerts gemäß Schritt (b) zusätzlich ein Bildbereichswert zugrunde gelegt werden, der einem Vergleichsbild von reduzierter Ortsauflösung zugeordnet ist. Hierdurch kann die Qualität der Vorhersage verbessert werden. Allerdings muss dieses Vergleichsbild ebenfalls komprimiert und gespeichert werden, damit der jeweilige Bildbereichswert auch bei der Dekompression gemäß Fig. 2 zur Verfügung steht und bei dem Ermitteln des nachgebildeten geschätzten Pixelwerts gemäß Schritt (e) zur Verfügung steht.

Gemäß einer weiteren vorteilhaften Weiterbildung kann der Vorhersage des jeweiligen geschätzten Pixelwerts in Schritt (b) gemäß Fig. 1 ein Pixelreferenzwert zugrunde gelegt werden, der im Falle von Bewegtbilddaten einem vorangegangenen, d.h. zuvor bereits kodierten bzw. dekodierten Bild entspricht. Sofern ein solcher Pixelreferenzwert beim Ermitteln des geschätzten Pixelwerts während der Kompression berücksichtigt wird, muss der Pixelreferenzwert (in dekodierter Form) auch bei der Dekompression gemäß Fig. 2 zur Verfügung stehen.

Besonders vorteilhaft ist es, wenn der bei der Dekompression gemäß Fig. 2 erhaltene rücktransformierte Indexdifferenzwert noch mit einem vorbestimmten Rauschwert verrechnet wird, insbesondere indem in dem Schritt (g) der jeweilige vorbestimmte Rauschwert dem rücktransformierten Indexdifferenzwert des betreffenden Pixels hinzugefügt wird. Hierdurch kann eine kontinuierliche oder quasi-kontinuierliche Verteilung der rücktransformierten Indexdifferenzwerte erreicht werden. Damit das Hinzufügen von derartigen Rauschwerten das Gesamtrauschen im Bild nicht erhöht, kann der jeweilige Rauschwert bereits bei der Kompression gemäß Fig. 1 berücksichtigt werden, insbesondere um bei der Quantisierung des jeweiligen Indexdifferenzwerts gemäß Schritt (d) die günstigste Quantisierungsstufe auswählen zu können, d.h. diejenige Quantisierungsstufe, die bei Hinzufügen des jeweiligen Rauschwerts dem resultierenden Indexdifferenzwert am nächsten liegt. Hierfür kann in dem Schritt (d) der jeweilige vorbestimmte Rauschwert dem Indexdifferenzwert des betreffenden Pixels hinzugefügt werden, wobei dies bezüglich des Schritts (g) mit umgekehrtem Vorzeichen geschieht. Damit der jeweilige Rauschwert bei der Kompression gemäß Fig. 1 und bei der Dekompression gemäß Fig. 2 bekannt ist, können die Rauschwerte auf Grundlage einer vorbestimmten Sequenz von Zufallszahlen generiert werden, die mittels eines Pseudo-Zufallsgenerators erzeugt wird, wobei der Startwert sowohl bei der Kompression als auch bei der Dekompression bekannt ist.

Um bei einem derartigen Hinzufügen von künstlichen Rauschwerten die Effizienz des Komprimierens der quantisierten Indexdifferenzwerte zu verbessern, kann der jeweilige vorbestimmte Rauschwert während des Kodierens der Pixelwerte gemäß Fig. 1 auch dazu verwendet werden, die quantisierten Indexdifferenzwerte vor dem Komprimieren wahlweise zu invertieren. Hierzu wird geprüft, ob der jeweilige vorbestimmte Rauschwert ein positives oder ein negatives Vorzeichen besitzt, wobei lediglich in einem dieser beiden Fälle (z.B. bei negativem Vorzeichen des Rauschwerts) das Vorzeichen des quantisierten Indexdifferenzwerts geändert wird, insbesondere in dem Schritt (d) gemäß Fig. 1. Diese Änderung des Vorzeichens wird bei dem späteren Dekodieren nach der Dekompression gemäß Fig. 2 in dem Schritt (g) wieder rückgängig gemacht, so dass durch die temporäre Vorzeichenänderung keine Information verloren geht. Durch die temporäre Vorzeichenänderung der quantisierten Indexdifferenzwerte wird jedoch die Effizienz des Komprimierens der quantisierten Indexdifferenzwerte in dem Schritt (i) gemäß Fig. 1 verbessert, da die mittlere Abweichung der quantisierten Indexdifferenzwerte von ihrem Mittelwert verringert wird.

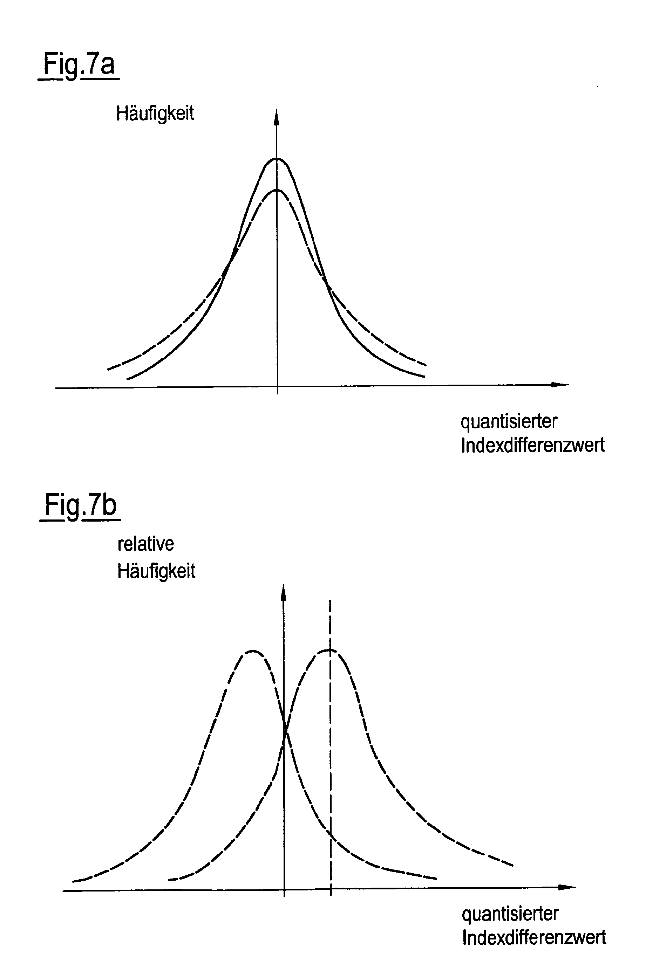

Dies ist in Fig. 7a und 7b beispielhaft illustriert. Fig. 7a zeigt eine typische Häufigkeitsverteilung der quantisierten Indexdifferenzwerte um einen Mittelwert Null ohne Berücksichtigung von künstlichen Rauschwerten (durchgezogene Kurve). Falls den Indexdifferenzwerten vor der Quantisierung künstliche Rauschwerte hinzugefügt werden, die willkürlich ein positives oder ein negatives Vorzeichen besitzen können, bewirkt dies eine Verbreiterung der Häufigkeitsverteilung (gestrichelte Kurve in Fig. 7a). Diese verbreiterte Häufigkeitsverteilung entspricht letztlich einer Überlagerung der Häufigkeitsverteilung der quantisierten Indexdifferenzwerte, denen ein negativer Rauschwert zugrunde liegt, und der Häufigkeitsverteilung der quantisierten Indexdifferenzwerte, denen ein positiver Rauschwert zugrunde liegt. Dies ist (mit angepasstem Maßstab der Ordinate) in Fig. 7b gezeigt (gestrichelte linke Kurve bzw. gestrichelte rechte Kurve). Falls nun vor dem Komprimieren diejenigen quantisierten Indexdifferenzwerte, für die ein negativer vorbestimmter Rauschwert berücksichtigt wurde, ein umgekehrtes Vorzeichen erhalten, entspricht dies einem Umklappen der linken Kurve von Fig. 7b bezüglich der Ordinate, d.h. auf die rechte Kurve von Fig. 7b. Somit wird wieder eine relative schmale Häufigkeitsverteilung erreicht (entsprechend der durchgezogenen Kurve in Fig. 7a), allerdings mit einem verschobenen Mittelwert (gestrichelte vertikale Linie in Fig. 7b).

Gemäß einer weiteren vorteilhaften Weiterbildung kann nach erfolgter Quantisierung des jeweiligen Indexdifferenzwerts gemäß Schritt (d) in Fig. 1 in einem Schritt (m) ein Quantisierungsfehler für den betreffenden Pixel ermittelt werden, wobei dieser Quantisierungsfehler für das nachfolgende Quantisieren des Indexdifferenzwerts zumindest eines anderen (insbesondere benachbarten) Pixels gemäß Schritt (d) berücksichtigt wird. Der Quantisierungsfehler wird vorzugsweise dadurch ermittelt, dass der gemäß Fig. 1 ermittelte quantisierte Indexdifferenzwert des jeweiligen Pixels unter Verwendung der bereits genannten Differenzwert-Rücktransformationsregel, die einer Umkehrung der Differenzwert-Quantisierungsregel entspricht, wieder rücktransformiert wird, wobei die Differenz zwischen dem rücktransformierten Indexdifferenzwert und dem ursprünglichen Indexdifferenzwert gebildet wird. Der jeweils ermittelte Quantisierungsfehler wird vorzugsweise dazu verwendet, für einen anderen Pixel das Bestimmen des quantisierten Indexdifferenzwerts gemäß der Differenzwert-Quantisierungsregel in dem Schritt (d) zu beeinflussen, so dass die Summe der Quantisierungsfehler nicht übermäßig anwächst, z.B. einen vorbestimmten Schwellenwert nicht überschreitet. Hierfür wird für den anderen Pixel diejenige Quantisierungsstufe (quantisierter Indexdifferenzwert) ausgewählt, die der Summe aus dem betreffenden Indexdifferenzwert und dem ermittelten Quantisierungsfehler (oder eines Teils hiervon) am nächsten liegt.

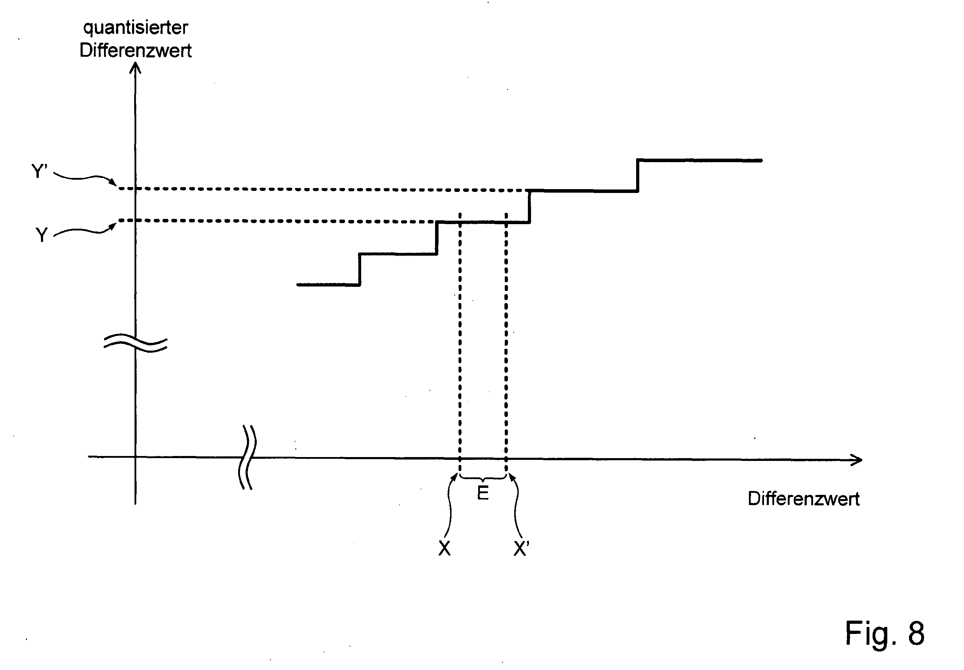

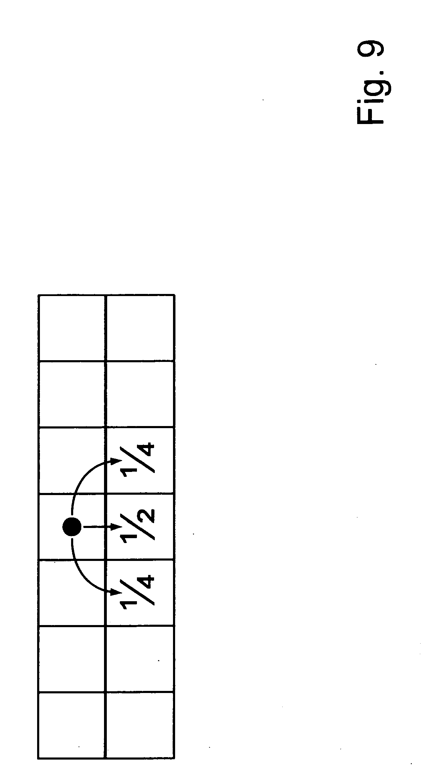

Eine mögliche Berücksichtigung des Quantisierungsfehlers wird nachfolgend anhand von Fig. 8 und 9 erläutert. Fig. 8 zeigt eine Detailansicht einer Quantisierungsvorschrift, die wiederum als Stufenfunktion dargestellt ist. Es sei angenommen, dass der Differenzwert (insbesondere der vorgenannte Indexdifferenzwert) des betreffenden Pixels X beträgt, was gemäß der Differenzwert-Quantisierungsregel zu einem quantisierten Differenzwert Y führen würde. Sofern allerdings zuvor ein Quantisierungsfehler E ermittelt worden ist und vor der Quantisierung des Differenzwerts X auf diesen aufsummiert wird, ergibt sich ein modifizierter Differenzwert X'. Für diesen wird gemäß der Quantisierungsregel als besser geeigneter (d.h. nächst liegender) quantisierter Differenzwert der Wert Y' identifiziert.

Anstelle einer derartigen Berücksichtigung des Quantisierungsfehlers vor der Quantisierung des Differenzwerts kann der Quantisierungsfehler auch nach dem Quantisieren des Differenzwerts noch berücksichtigt werden, beispielsweise indem der quantisierte Differenzwert in Abhängigkeit von dem ermittelten Quantisierungsfehler nachträglich um eine Einheit erhöht oder verringert wird (Quantisierungskorrektur). In diesem Fall muss der Quantisierungsfehler E noch in die Dimension der Indexwerte umgerechnet werden (durch entsprechende Anwendung der Differenzwert-Quantisierungsregel).

Wie in Fig. 9 gezeigt ist, kann der jeweilige Quantisierungsfehler E mit unterschiedlicher Gewichtung auch auf mehrere benachbarte Pixel verteilt werden (hier: 1/4, 1/2, 1/4), um in der erläuterten Weise eine Modifizierung der Quantisierungsregel für den betreffenden Pixel zu bewirken.

Eine derartige Ermittlung und Berücksichtigung eines Quantisierungsfehlers kann nicht nur für das Quantisieren der Differenzwerte oder Indexdifferenzwerte gemäß Schritt (d), sondern bei analoger Vorgehensweise alternativ oder zusätzlich auch für das Quantisieren der tatsächlichen Pixelwerte gemäß Schritt (a) vorgesehen sein.

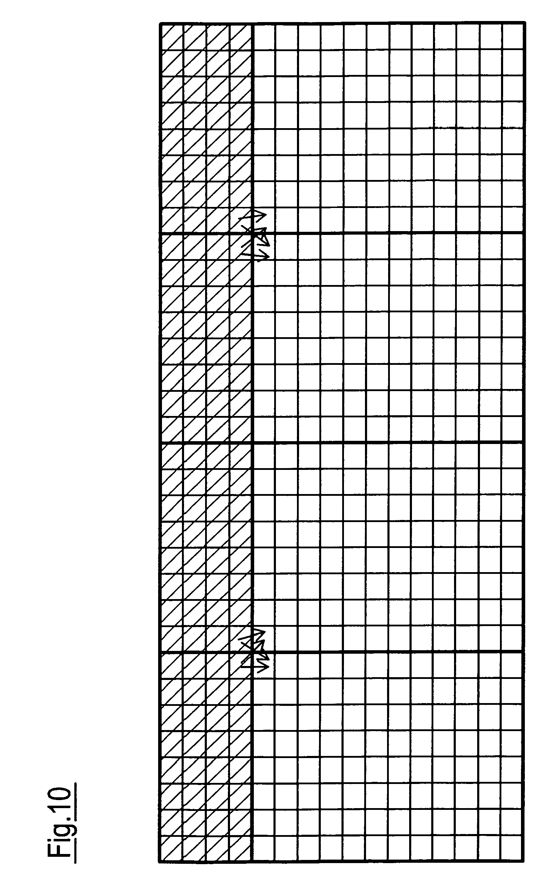

Fig. 10 zeigt eine mögliche Berücksichtigung eines ermittelten Quantisierungsfehlers bei einer Unterteilung der Pixel in Spaltengruppen. Bei dem gezeigten Beispiel sind die Pixel in 16 Zeilen und 32 Spalten angeordnet, wobei die Spalten vier Spaltengruppen zugeordnet sind, von denen jede acht Spalten umfasst. Die Pixelwerte werden in der vorstehend erläuterten Weise innerhalb einer jeden Spaltengruppe zeilenweise kodiert, wobei die Pixelwerte der verschiedenen Spaltengruppen parallel kodiert werden, wodurch das Kodieren besonders schnell erfolgen kann. Die ersten vier Zeilen einer jeden Spaltengruppe sind bei dem gezeigten Beispiel bereits kodiert. Um einen ermittelten Quantisierungsfehler möglichst wirkungsvoll zu berücksichtigen, wird nach Erreichen eines jeweiligen Zeilenendes (hier des Endes der vierten Zeile in einer jeden Spaltengruppe) der in der jeweiligen Spaltengruppe ermittelte Quantisierungsfehler an eine benachbarte Spaltengruppe weitergegeben, damit der Quantisierungsfehler auch dort für das Kodieren der nachfolgenden Zeile verwendet wird. Zusätzlich wird der jeweilige Quantisierungsfehler auch in der jeweiligen eigenen Spaltengruppe für das Kodieren der nachfolgenden Zeile verwendet. Die Weitergabe des Quantisierungsfehlers ist in Fig. 10 durch einen jeweiligen Pfeil dargestellt. Bei dem gezeigten Beispiel wird der jeweilige Quantisierungsfehler zwischen der ersten und der zweiten Spaltengruppe und zwischen der dritten und der vierten Spaltengruppe ausgetauscht. Es ist alternativ beispielsweise auch möglich, dass (mit Ausnahme der rechten Spaltengruppe) jede Spaltengruppe den jeweiligen Quantisierungsfehler an die rechts benachbarte Spaltengruppe weitergibt.

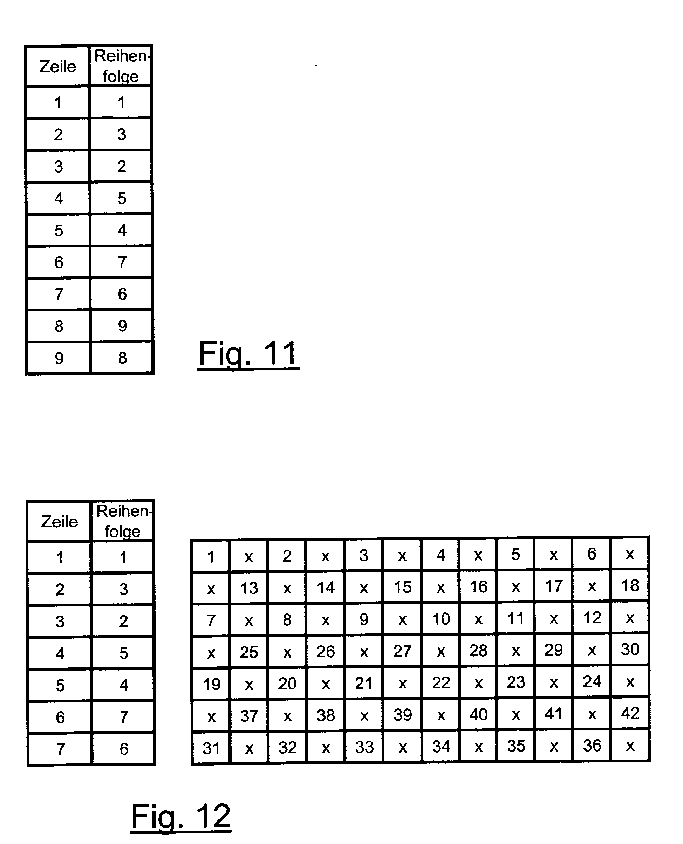

Fig. 11 illustriert eine besonders vorteilhafte Reihenfolge des Kodierens verschiedener Zeilen, in denen die Pixel angeordnet sind. Die Pixelwerte werden hier derart zeilenweise kodiert, dass abwechselnd Pixelwerte der jeweiligen drittnächsten Zeile und Pixelwerte der jeweiligen vorhergehenden Zeile kodiert werden, wobei an den Bildrändern natürlich die erforderlichen Anpassungen vorgesehen sein können. Beispielsweise wird ausgehend von Zeile 1 zwar zunächst die Zeile 3 (= ausnahmsweise übernächste Zeile wegen Bildrand) kodiert, danach jedoch die Zeile 2 (= vorhergehende Zeile), danach die Zeile 5 (= drittnächste Zeile), danach die Zeile 4 (= vorhergehende Zeile), danach die Zeile 7 (= drittnächste Zeile), und nun immer so fort. Für das Kodieren einer jeweiligen drittnächsten Zeile, beispielsweise der Zeile 7, erfolgt die Vorhersage des geschätzten Pixelwerts eines jeweiligen Pixels dieser Zeile in Abhängigkeit von Pixelwerten der hierzu vorvorhergehenden Zeile (= Zeile 5). Zu diesem Zeitpunkt sind nämlich lediglich die Zeilen 1 bis 5 bereits kodiert, nicht jedoch die Zeilen 6 oder 8. Für das Kodieren einer jeweiligen vorhergehenden Zeile, beispielsweise der Zeile 6, erfolgt die Vorhersage des geschätzten Pixelwerts eines jeweiligen Pixels dieser Zeile in Abhängigkeit von Pixelwerten der hierzu vorhergehenden Zeile (= Zeile 5) und der hierzu nächsten Zeile (= Zeile 7). Zu diesem Zeitpunkt sind nämlich bereits die unmittelbar benachbarten Zeilen (Zeilen 5 und 7) bereits kodiert. Natürlich können auch Pixelwerte aus noch weiter zurückliegenden Zeilen berücksichtigt werden, da zu diesem Zeitpunkt auch die Zeilen 1 bis 4 bereits kodiert sind.

Fig. 12 illustriert eine vorteilhafte Weiterbildung des Auslesekonzepts gemäß Fig. 11. Auch hier werden einige der Pixelwerte gemäß der erläuterten Zeilenreihenfolge derart zeilenweise kodiert, dass abwechselnd Pixelwerte der jeweiligen drittnächsten Zeile und Pixelwerte der jeweiligen vorhergehenden Zeile kodiert werden, wobei an den Bildrändern Anpassungen vorgenommen werden. Diese Zeilenreihenfolge ist analog zu Fig. 11 in dem linken Diagramm von Fig. 12 gezeigt.

Das rechte Diagramm von Fig. 12 zeigt zusätzlich die Reihenfolge des Kodierens der Pixelwerte innerhalb der jeweiligen Zeile. Hierfür ist vorgesehen, dass innerhalb der jeweiligen Zeile lediglich für jeden zweiten Pixel der geschätzte Pixelwert ermittelt wird, wobei für die restlichen Pixel später der geschätzte Pixelwert in Abhängigkeit von dem jeweiligen Pixelwert von vier unmittelbar benachbarten Pixeln ermittelt wird, die bereits kodiert und wieder dekodiert worden sind. Beispielsweise werden zunächst in Zeile 1 und danach in Zeile 3 lediglich die Pixelwerte der Pixel der ungeradzahligen Spalten kodiert (Bezugszeichen 1 bis 12 in dem rechten Diagramm von Fig. 12). Danach werden in Zeile 2 (= vorhergehende Zeile) die Pixelwerte der Pixel der geradzahligen Spalten kodiert (Bezugszeichen 13 bis 18). Hierfür wird der geschätzte Pixelwert des jeweiligen Pixels in Abhängigkeit von dem jeweiligen Pixelwert der vier diagonal benachbarten Pixel ermittelt. Beispielsweise wird der geschätzte Pixelwert des Pixels 14 in Zeile 2 in Abhängigkeit von dem jeweiligen Pixelwert der Pixel 2, 3, 8 und 9 in den Zeilen 1 und 3 ermittelt. Der jeweilige Pixelwert der vier diagonal benachbarten Pixel ist hierfür zuvor kodiert und wieder dekodiert worden, damit für das Ermitteln des geschätzten Pixelwerts des betreffenden Pixels dieselbe Information verwendet wird, die auch bei der späteren Dekodierung zur Verfügung steht. Danach werden in Zeile 5 (= drittnächste Zeile) die Pixelwerte der Pixel der ungeradzahligen Spalten kodiert (Bezugszeichen 19 bis 24). Hierfür wird der geschätzte Pixelwert des jeweiligen Pixels in Abhängigkeit von dem Pixelwert des Pixels ermittelt, der in der vorvorhergehenden Zeile in derselben Spalte angeordnet ist. Beispielsweise wird der geschätzte Pixelwert des Pixels 20 in Zeile 5 in Abhängigkeit von dem Pixelwert des Pixels 8 in Zeile 3 ermittelt. Diese Kodierreihenfolge setzt sich fort, bis ein Muster von kodierten Pixeln gebildet ist, bei dem (abgesehen von den Bildrändern) aus der Sicht eines jeden kodierten Pixels die vier diagonal benachbarten Pixel ebenfalls bereits kodiert worden sind (in Fig. 12 durch eine jeweilige Zahl gekennzeichnet) und die vier unmittelbar benachbarten Pixel noch nicht kodiert worden sind (in Fig. 12 durch "x" gekennzeichnet). Vorzugsweise umfassen die Bilddaten bei einem Farbbild oder RAW-Bild Pixelwerte der Farben Rot, Grün und Blau, wobei die somit kodierten Pixelwerte die des Grünkanals sind.

Die restlichen Pixel, also die in Fig. 12 durch "x" gekennzeichneten Pixel (z.B. Farbe Rot und Blau), werden in Abhängigkeit zumindest der Pixelwerte der bereits kodierten Pixel (Farbe Grün) kodiert, wobei nicht unbedingt die vorstehend erläuterte Zeilenreihenfolge eingehalten werden muss. Wichtig ist lediglich, dass der jeweilige geschätzte Pixelwert nun in Abhängigkeit von dem jeweiligen Pixelwert der vier unmittelbar benachbarten Pixel ermittelt wird. Beispielsweise wird der geschätzte Pixelwert des Pixels, der in Zeile 3 zwischen den Pixeln 8, 9, 14 und 26 angeordnet ist, zumindest in Abhängigkeit von dem jeweiligen Pixelwert dieser vier Pixel 8, 9, 14 und 26 ermittelt. Um hierbei keinen Schätzfehler zu akkumulieren, ist es wichtig, dass die Pixelwerte der jeweiligen vier unmittelbar benachbarten Pixel (z.B. Pixel 8, 9, 14 und 26) zuvor bereits kodiert und wieder dekodiert worden sind.

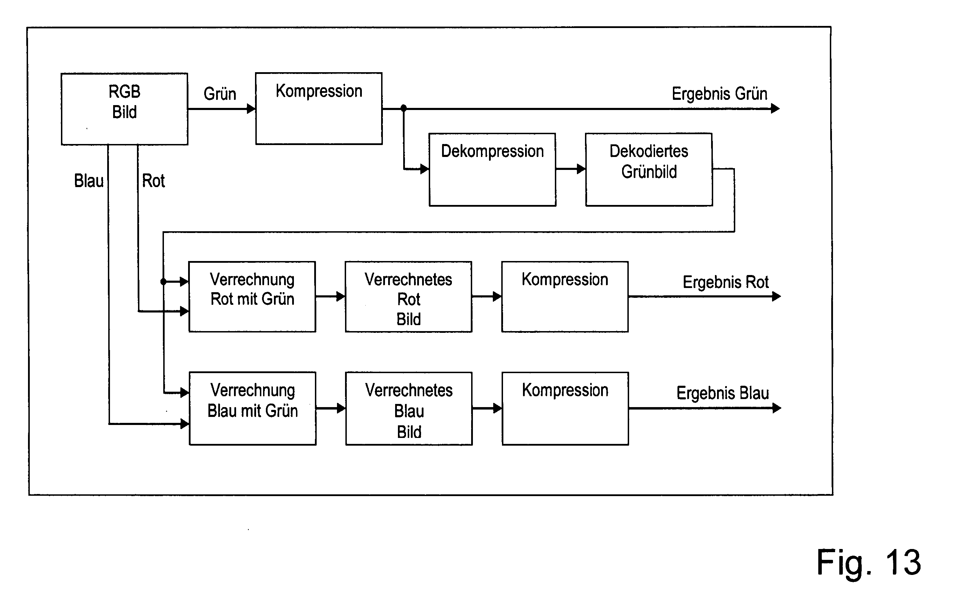

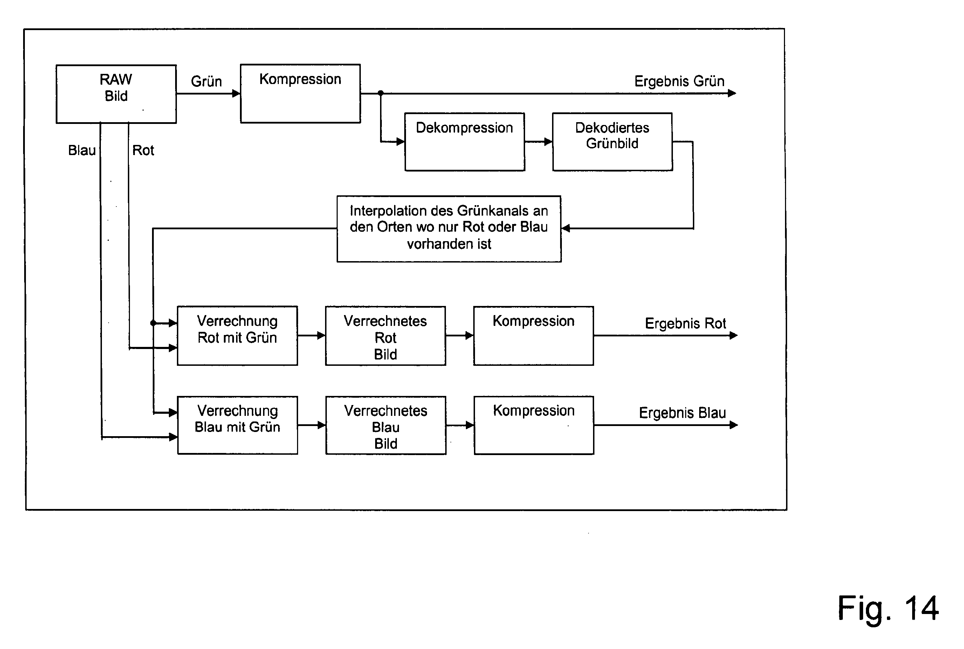

Bei der vorstehend erläuterten Ausführungsform können zusätzlich weitere Abhängigkeiten berücksichtigt werden. Beispielsweise kann bei einem Farbbild oder RAW-Bild für jedes der genannten restlichen Pixel (d.h. für die noch nicht kodierten Pixel der Farbe Rot oder Blau) ein Mittelwert der kodierten und wieder dekodierten Pixelwerte der jeweiligen vier unmittelbar benachbarten Pixel (Farbe Grün) gebildet werden, entsprechend einer Interpolation. Dieser Mittelwert wird mit dem tatsächlichen Pixelwert des betreffenden Pixels (Farbe Rot oder Blau) verrechnet, bevor dieser kodiert wird, so dass die jeweilige Schätzung anhand von modifizierten Pixelwerten der Farbe Rot oder Blau durchgeführt wird. Hierbei ist es von Vorteil, dass der Grünkanal dem Luminanzwert am ähnlichsten ist. Diese Vorgehensweise wird nachfolgend allgemein anhand der Fig. 13 und 14 erläutert.

In Fig. 13 ist gezeigt, dass bei einem RGB-Bild, das Bilddaten für drei verschiedene Farbkanäle umfasst, die Kompression getrennt nach den Farbkanälen durchgeführt werden kann. Die Pixelwerte der zweiten Farbe (Rot) und der dritten Farbe (Blau) werden in Abhängigkeit von den Pixelwerten der ersten Farbe (Grün) modifiziert (beispielsweise durch die Bildung einer Differenz oder eines Quotienten), nachdem die Pixelwerte der ersten Farbe kodiert und wieder dekodiert worden sind. Das Ermitteln eines geschätzten Pixelwerts eines jeweiligen Pixels der zweiten Farbe (Rot) oder der dritten Farbe (Blau) erfolgt somit in Abhängigkeit von dem Pixelwert der betreffenden Farbe zumindest eines vorbestimmten anderen Pixels, nachdem dieser Pixelwert in der genannten Weise modifiziert worden ist. Mit anderen Worten handelt es sich bei den geschätzten Pixelwerten und den tatsächlichen Pixelwerten beispielsweise um Farbdifferenzwerte oder Farbquotientenwerte. Diese Operation kann beim Dekodieren der Pixelwerte der zweiten Farbe und der dritten Farbe wieder rückgängig gemacht werden, da auch beim Dekodieren die Pixelwerte der ersten Farbe zur Verfügung stehen. Die erläuterte Vorgehensweise wirkt sich jedoch vorteilhaft auf die Effizienz des Komprimierens aus.

Fig. 14 zeigt ein ähnliches Verfahren für die Bilddaten eines RAW-Bildes, bei dem an jedem Bildort nur eine einzige Farbinformation vorhanden ist. Hier wird anhand der Pixelwerte des ersten Farbkanals (Grün) nach dem Kodieren und neuerlichen Dekodieren erst eine Interpolation durchgeführt, um einen jeweiligen Pixelwert des ersten Farbkanals auch für den Ort der Pixel des zweiten bzw. dritten Farbkanals zu erhalten. Auf diese Weise kann wieder eine gegenseitige Verrechnung der Farbkanäle erfolgen, wie bei Fig. 13 vorgesehen, d.h. die Pixelwerte der zweiten Farbe (Rot) und der dritten Farbe (Blau) werden in Abhängigkeit von den interpolierten Pixelwerten der ersten Farbe (Grün) modifiziert (beispielsweise durch die Bildung einer Differenz oder eines Quotienten). Das Ermitteln eines geschätzten Pixelwerts eines jeweiligen Pixels der zweiten Farbe (Rot) oder der dritten Farbe (Blau) erfolgt dann insbesondere in Abhängigkeit von dem jeweiligen Pixelwert der vier unmittelbar benachbarten Pixel der ersten Farbe (Grün), und vorzugsweise auch in Abhängigkeit von dem Pixelwert zumindest eines anderen Pixels der betreffenden Farbe (Rot oder Blau), nachdem dieser andere Pixel in der genannten Weise modifiziert worden ist. Diese Operation kann beim Dekodieren der Pixelwerte der zweiten Farbe und der dritten Farbe wieder rückgängig gemacht werden, da auch beim Dekodieren die Pixelwerte der ersten Farbe zur Verfügung stehen. Die erläuterte Vorgehensweise wirkt sich jedoch vorteilhaft auf die Effizienz des Komprimierens aus.

## Patentansprüche

1. Verfahren zur Kompression von Bilddaten, die eine Vielzahl von Pixelwerten umfassen, die einem jeweiligen Pixel zugeordnet sind, wobei für zumindest einige Pixel die Pixelwerte gemäß den folgenden Schritten kodiert werden:
(b) Ermitteln eines geschätzten Pixelwerts des betreffenden Pixels in Abhängigkeit von dem Pixelwert zumindest eines vorbestimmten anderen Pixels unter Verwendung wenigstens einer Schätzregel; und
(d) Bilden eines Differenzwerts des betreffenden Pixels, der einer vorbestimmten Relation zwischen dem Pixelwert und dem geschätzten Pixelwert des betreffenden Pixels entspricht, und Quantisieren des Differenzwerts gemäß einer Differenzwert-Quantisierungsregel;
wobei die quantisierten Differenzwerte der Pixel gemäß einer Komprimierregel komprimiert werden.

2. Verfahren nach Anspruch 1, wobei für das Quantisieren der Differenzwerte dieselbe Differenzwert-Quantisierungsregel verwendet oder jeweils wenigstens eine von mehreren verschiedenen Differenzwert-Quantisierungsregeln ausgewählt wird;
und/oder
wobei in dem Schritt (d) der Differenzwert des betreffenden Pixels mit einem Schwellenwert verglichen wird, wobei anstelle des Differenzwerts ein Ersatzwert in dem Schritt (d) quantisiert und komprimiert wird, falls der Differenzwert betragsmäßig größer ist als der Schwellenwert;
und / oder
wobei gemäß der Differenzwert-Quantisierungsregel betragsmäßig größere Differenzwerte gröber quantisiert werden als betragsmäßig kleinere Differenzwerte.

3. Verfahren nach einem der vorhergehenden Ansprüche, wobei in oder nach dem Schritt (d) des Quantisierens des Differenzwerts ein Quantisierungsfehler für den betreffenden Pixel ermittelt wird, wobei der Quantisierungsfehler für das spätere Quantisieren des Differenzwerts zumindest eines anderen Pixels berücksichtigt wird; wobei der Quantisierungsfehler vorzugsweise dadurch ermittelt wird, dass der quantisierte Differenzwert des betreffenden Pixels unter Verwendung einer Differenzwert-Rücktransformationsregel, die einer Umkehrung der Differenzwert-Quantisierungsregel entspricht, rücktransformiert wird, und dass eine jeweilige Differenz zwischen dem rücktransformierten Differenzwert und dem ursprünglichen Differenzwert gebildet wird.

4. Verfahren nach Anspruch 3, wobei der für den betreffenden Pixel ermittelte Quantisierungsfehler dazu verwendet wird, das spätere Quantisieren des Differenzwerts zumindest eines anderen Pixels derart zu beeinflussen, dass für die Vielzahl von Pixelwerten eine Summe der Quantisierungsfehler nicht anwächst oder einen vorbestimmten Grenzwert nicht übersteigt;
und/oder
wobei die Pixel in einer Anordnung von mehreren Zeilen und Spalten vorgesehen sind, wobei die Spalten mehreren Spaltengruppen zugeordnet sind, von denen jede mehrere Spalten umfasst, wobei die Pixelwerte innerhalb einer jeden Spaltengruppe zeilenweise kodiert werden und die Pixelwerte der verschiedenen Spaltengruppen parallel kodiert werden, wobei nach Erreichen eines jeweiligen Zeilenendes in einer der mehreren Spaltengruppen ein in dieser Spaltengruppe ermittelter Quantisierungsfehler für das Kodieren der betreffenden Zeile oder einer nachfolgenden Zeile in wenigstens einer benachbarten Spaltengruppe verwendet wird.

5. Verfahren nach Anspruch 3 oder 4, wobei der für den betreffenden Pixel ermittelte Quantisierungsfehler für das spätere Quantisieren des Differenzwerts zumindest eines anderen Pixels derart berücksichtigt wird, dass der Quantisierungsfehler teilweise oder vollständig auf den Differenzwert des jeweiligen anderen Pixels aufaddiert oder von dem Differenzwert subtrahiert wird, bevor oder während die Differenzwert-Quantisierungsregel auf diesen Differenzwert angewendet wird;
und/oder
wobei der für den betreffenden Pixel ermittelte Quantisierungsfehler für das spätere Quantisieren des Differenzwerts zumindest eines anderen Pixels derart berücksichtigt wird, dass für den quantisierten Differenzwert des jeweiligen anderen Pixels eine Quantisierungskorrektur durchgeführt wird, nachdem die Differenzwert-Quantisierungsregel auf diesen Differenzwert angewendet worden ist, wobei zum Durchführen der Quantisierungskorrektur vorzugsweise ein Quantisierungsrestwert in Abhängigkeit von dem quantisierten Differenzwert des jeweiligen anderen Pixels ermittelt wird, wobei der Quantisierungsrestwert mit dem ermittelten Quantisierungsfehler oder mit einem hieraus abgeleiteten Quantisierungsfehler verrechnet wird, um einen modifizierten Quantisierungsfehler zu ermitteln, und wobei der quantisierte Differenzwert des jeweiligen anderen Pixels um eine positive oder negative Quantisierungsstufe inkrementiert wird, falls der modifizierte Quantisierungsfehler einen vorbestimmten Schwellenwert überschreitet oder unterschreitet.

6. Verfahren nach einem der vorhergehenden Ansprüche, wobei das Kodieren der Pixelwerte vor dem Bilden des Differenzwerts des betreffenden Pixels zusätzlich den Schritt umfasst:
(a) Quantisieren des Pixelwerts des betreffenden Pixels unter Verwendung wenigstens einer Helligkeitswert-Quantisierungsregel;
wobei das Ermitteln des geschätzten Pixelwerts des betreffenden Pixels in Abhängigkeit von dem quantisierten Pixelwert des vorbestimmten anderen Pixels erfolgt;
wobei in dem Schritt (a) bei dem Quantisieren des Pixelwerts unter Verwendung der wenigstens einen Helligkeitswert-Quantisierungsregel größere Pixelwerte vorzugsweise gröber quantisiert werden als kleinere Pixelwerte, und/oder wobei in oder nach dem Schritt (a) des Quantisierens des Pixelwerts vorzugsweise ein Quantisierungsfehler für den betreffenden Pixel ermittelt wird, der für das spätere Quantisieren des Pixelwerts zumindest eines anderen Pixels berücksichtigt wird.

7. Verfahren nach einem der vorhergehenden Ansprüche, wobei vor dem Ermitteln des geschätzten Pixelwerts des betreffenden Pixels in Abhängigkeit von dem Pixelwert des vorbestimmten anderen Pixels der Pixelwert des vorbestimmten anderen Pixels kodiert und wieder dekodiert wird;
und/oder
wobei das Ermitteln des geschätzten Pixelwerts des betreffenden Pixels in Abhängigkeit von dem jeweiligen Pixelwert mehrerer vorbestimmter anderer Pixel erfolgt, wobei ein Teil dieser Pixel unmittelbar benachbart zu dem betreffenden Pixel angeordnet ist und ein weiterer Teil dieser Pixel mittelbar benachbart zu dem betreffenden Pixel angeordnet ist;
und/oder
wobei die Pixel in einer Anordnung von mehreren Zeilen vorgesehen sind, wobei die Pixelwerte zeilenweise kodiert werden, wobei das Ermitteln des geschätzten Pixelwerts des betreffenden Pixels in Abhängigkeit von dem jeweiligen Pixelwert mehrerer vorbestimmter anderer Pixel erfolgt, die in einer bereits kodierten Zeile angeordnet sind.

8. Verfahren nach einem der vorhergehenden Ansprüche, wobei die Pixel in einer Anordnung von mehreren Zeilen vorgesehen sind, wobei die Pixelwerte derart gemäß einer Zeilenreihenfolge kodiert werden, dass abwechselnd einige oder sämtliche der Pixelwerte der jeweiligen drittnächsten Zeile und einige oder sämtliche der Pixelwerte der jeweiligen vorhergehenden Zeile kodiert werden, wobei für das Kodieren von Pixelwerten der genannten jeweiligen drittnächsten Zeile das Ermitteln des geschätzten Pixelwerts des betreffenden Pixels in Abhängigkeit von dem Pixelwert zumindest eines vorbestimmten anderen Pixels erfolgt, der in der hierzu vorvorhergehenden Zeile angeordnet ist, und wobei für das Kodieren von Pixelwerten der genannten jeweiligen vorhergehenden Zeile das Ermitteln des geschätzten Pixelwerts des betreffenden Pixels in Abhängigkeit von dem jeweiligen Pixelwert mehrerer vorbestimmter anderer Pixel erfolgt, die in der hierzu vorhergehenden Zeile und in der hierzu nächsten Zeile angeordnet sind;
wobei innerhalb der jeweiligen Zeile vorzugsweise lediglich für jeden zweiten Pixel der geschätzte Pixelwert ermittelt wird, wobei für die restlichen Pixel unabhängig von der genannten Zeilenreihenfolge der geschätzte Pixelwert in Abhängigkeit von dem jeweiligen Pixelwert von vier unmittelbar benachbarten Pixeln ermittelt wird, die bereits kodiert worden sind.

9. Verfahren nach einem der vorhergehenden Ansprüche, wobei gemäß der Schätzregel das Ermitteln des geschätzten Pixelwerts des betreffenden Pixels in Abhängigkeit von einem gemittelten Wert der Pixelwerte mehrerer vorbestimmter anderer Pixel erfolgt;
und/oder
wobei das Ermitteln des geschätzten Pixelwerts des betreffenden Pixels in Abhängigkeit von den Pixelwerten mehrerer vorbestimmter anderer Pixel erfolgt, wobei gemäß der Schätzregel eine Kantenstruktur berücksichtigt wird, die in der Bildinformation der Pixelwerte der mehreren vorbestimmten anderen Pixel enthalten ist; und/ oder
wobei für das Ermitteln des geschätzten Pixelwerts des betreffenden Pixels wenigstens eine von mehreren verschiedenen Schätzregeln ausgewählt wird;
und/oder
wobei für den betreffenden Pixel mehrere geschätzte Pixelwerte unter Verwendung verschiedener Schätzregeln ermittelt werden, wobei für jede Schätzregel ein Signifikanzwert erzeugt wird, wobei für das Kodieren wenigstens einer der mehreren geschätzten Pixelwerte in Abhängigkeit von den erzeugten Signifikanzwerten ausgewählt wird.

10. Verfahren nach einem der vorhergehenden Ansprüche, wobei vor dem Kodieren der Pixelwerte wenigstens ein Satz von Bildbereichswerten in Abhängigkeit von den Pixelwerten erzeugt wird, wobei jeder Bildbereichswert einer Gruppe von Pixeln zugeordnet ist, so dass die Bildbereichswerte einem Bild von reduzierter Ortsauflösung entsprechen, wobei das Ermitteln des geschätzten Pixelwerts des betreffenden Pixels gemäß der Schätzregel in Abhängigkeit auch von wenigstens einem der Bildbereichswerte erfolgt, und wobei auch die Bildbereichswerte komprimiert werden;
wobei das Ermitteln eines geschätzten Pixelwerts des betreffenden Pixels vorzugsweise auch die folgenden Schritte umfasst:
- Ermitteln eines geschätzten Bildbereichszwischenwerts in Abhängigkeit zumindest von dem Pixelwert des vorbestimmten anderen Pixels und von dem jeweiligen Bildbereichswert unter Verwendung der wenigstens einen Schätzregel, wobei der Bildbereichszwischenwert einer kleineren Gruppe von Pixeln zugeordnet ist als der Bildbereichswert;
- optional Wiederholen dieses Schritts, um geschätzte Bildbereichszwischenwerte zu ermitteln, die einer noch kleineren Gruppe von Pixeln zugeordnet sind als die zuvor ermittelten Bildbereichszwischenwerte; und
- Ermitteln des geschätzten Pixelwerts des betreffenden Pixels in Abhängigkeit zumindest von dem Pixelwert des vorbestimmten anderen Pixels und von dem jeweiligen Bildbereichszwischenwert unter Verwendung der wenigstens einen Schätzregel.

11. Verfahren nach einem der vorhergehenden Ansprüche, wobei es sich bei den Bilddaten um Bewegtbilddaten handelt, die einer zeitlichen Folge von Bilddatensätzen entsprechen, wobei den Pixeln zusätzlich zu dem jeweiligen Pixelwert wenigstens ein jeweiliger Pixelreferenzwert zugeordnet ist, der einem Pixelwert eines vorangegangenen Bilddatensatzes der zeitlichen Folge entspricht, wobei das Ermitteln des geschätzten Pixelwerts des betreffenden Pixels gemäß der Schätzregel in Abhängigkeit auch von wenigstens einem der Pixelreferenzwerte erfolgt;
und/ oder
wobei die Pixelwerte mehrerer verschiedener Pixel gleichzeitig kodiert werden;
und/oder
wobei die Bilddaten Pixelwerte einer ersten Farbe, Pixelwerte einer zweiten Farbe, und Pixelwerte einer dritten Farbe umfassen, wobei die Pixelwerte der zweiten Farbe in Abhängigkeit von den Pixelwerten der ersten Farbe modifiziert werden, bevor die Pixelwerte der zweiten Farbe kodiert werden, und die Pixelwerte der dritten Farbe in Abhängigkeit von den Pixelwerten der ersten Farbe modifiziert werden, bevor die Pixelwerte der dritten Farbe kodiert werden, wobei vor dem jeweiligen Modifizieren der Pixelwerte der zweiten und dritten Farbe die Pixelwerte der ersten Farbe vorzugsweise kodiert und wieder dekodiert werden;
und/oder
wobei die quantisieren Differenzwerte der Pixel gemäß einer bekannten Komprimierregel verlustfrei komprimiert werden.

12. Verfahren nach einem der vorhergehenden Ansprüche, wobei zur Dekompression der Bilddaten die quantisierten Differenzwerte der Pixel gemäß einer Dekomprimierregel dekomprimiert werden, die einer Umkehrung der Komprimierregel entspricht, und wobei die Pixelwerte gemäß den folgenden Schritten dekodiert werden:
(e) Ermitteln eines nachgebildeten geschätzten Pixelwerts des betreffenden Pixels in Abhängigkeit von zumindest einem zuvor dekodierten Pixelwert, der dem zumindest einen vorbestimmten anderen Pixel entspricht, unter Verwendung der wenigstens einen Schätzregel; und
(g) Ermitteln eines rücktransformierten Differenzwerts des betreffenden Pixels in Abhängigkeit von dem dekomprimierten quantisierten Differenzwert unter Verwendung einer Differenzwert-Rücktransformationsregel, die einer Umkehrung der Differenzwert-Quantisierungsregel entspricht, und Ermitteln eines dekodierten Pixelwerts des betreffenden Pixels in Abhängigkeit von dem rücktransformierten Differenzwert und dem nachgebildeten geschätzten Pixelwert des betreffenden Pixels.

13. Verfahren nach Anspruch 12, wobei die Pixelwerte gemäß einer bestimmten Reihenfolge der Pixel dekodiert werden, und wobei die Anordnung des zumindest einen vorbestimmten anderen Pixels derart gewählt ist, dass für diesen vorbestimmten anderen Pixel der Pixelwert gemäß der bestimmten Reihenfolge bereits dekodiert worden ist, wenn der nachgebildete geschätzte Pixelwert des betreffenden Pixels ermittelt wird;
und/oder
wobei ein Teil der Vielzahl von Pixelwerten nicht oder nicht vollständig kodiert wird, wobei diese Pixelwerte beim Ermitteln des nachgebildeten geschätzten Pixelwerts als jeweiliger Ersatzwert für den genannten zuvor dekodierten Pixelwert des zumindest einen vorbestimmten anderen Pixels verwendet werden;
und/oder
wobei das Kodieren der Pixelwerte vor dem Bilden des Differenzwerts des betreffenden Pixels zusätzlich den Schritt umfasst:
(a) Quantisieren des Pixelwerts des betreffenden Pixels unter Verwendung wenigstens einer Helligkeitswert-Quantisierungsregel;
wobei das Ermitteln des geschätzten Pixelwerts des betreffenden Pixels in dem Schritt (b) in Abhängigkeit von dem quantisierten Pixelwert des vorbestimmten anderen Pixels erfolgt, wobei während des Dekodierens der Pixelwerte das Ermitteln des dekodierten Pixelwerts des betreffenden Pixels in dem Schritt (g) auch ein Rücktransformieren des Pixelwerts unter Verwendung einer Helligkeitswert-Rücktransformationsregel umfasst, die einer Umkehrung der Helligkeitswert-Quantisierungsregel entspricht.

14. Verfahren nach Anspruch 12 oder 13, wobei das Kodieren der Pixelwerte vor dem Bilden des Differenzwerts des betreffenden Pixels zusätzlich den Schritt umfasst:
(a) Quantisieren des Pixelwerts des betreffenden Pixels unter Verwendung wenigstens einer Helligkeitswert-Quantisierungsregel;
wobei das Ermitteln des geschätzten Pixelwerts des betreffenden Pixels in dem Schritt (b) in Abhängigkeit von dem quantisierten Pixelwert des vorbestimmten anderen Pixels erfolgt, wobei das Quantisieren des Pixelwerts des betreffenden Pixels in dem Schritt (a) in Abhängigkeit auch von einem vorbestimmten Rauschwert des betreffenden Pixels erfolgt, wobei während des Dekodierens der Pixelwerte das Ermitteln des dekodierten Pixelwerts des betreffenden Pixels in dem Schritt (g) in Abhängigkeit auch von dem vorbestimmten Rauschwert des betreffenden Pixels erfolgt;
wobei während des Kodierens der Pixelwerte in Abhängigkeit von dem jeweiligen gebildeten Differenzwert und dem jeweiligen vorbestimmten Rauschwert des betreffenden Pixels vorzugsweise ein Rauschkompensationswert ermittelt wird und in dem Schritt (d) der jeweilige Differenzwert in Abhängigkeit von dem ermittelten Rauschkompensationswert vor dem Komprimieren verringert wird.

15. Verfahren nach einem der Ansprüche 12 bis 14, wobei während des Kodierens der Pixelwerte das Quantisieren des Differenzwerts des betreffenden Pixels in dem Schritt (d) in Abhängigkeit auch von einem vorbestimmten Rauschwert des betreffenden Pixels erfolgt, wobei während des Dekodierens der Pixelwerte das Ermitteln des dekodierten Pixelwerts des betreffenden Pixels in dem Schritt (g) ebenfalls in Abhängigkeit von dem vorbestimmten Rauschwert des betreffenden Pixels erfolgt.

16. Verfahren nach Anspruch 15, wobei in dem Schritt (d) der vorbestimmte Rauschwert dem Pixelwert oder dem Differenzwert des betreffenden Pixels hinzugefügt wird und in dem Schritt (g) der vorbestimmte Rauschwert dem rücktransformierten Differenzwert oder dem dekodierten Pixelwert des betreffenden Pixels mit umgekehrtem Vorzeichen hinzugefügt wird;
und/oder
wobei während des Kodierens der Pixelwerte das Vorzeichen des quantisierten Differenzwerts in Abhängigkeit von dem Vorzeichen des vorbestimmten Rauschwerts vor dem Komprimieren geändert wird, wobei während des Dekodierens der Pixelwerte das Vorzeichen des dekomprimierten quantisierten Differenzwerts des betreffenden Pixels erneut in Abhängigkeit von dem Vorzeichen des vorbestimmten Rauschwerts geändert wird;
und/oder
wobei der vorbestimmte Rauschwert mittels eines Pseudo-Zufallsgenerators erzeugt wird.
